# EUROPEAN PATENT APPLICATION

(11) **EP 4 723 041 A1**
(43) Date of publication of application: **08.04.2026**
(21) Application number: 24849624.2
(22) Date of filing: 31.07.2024
(51) Int. Cl.: G06T 11/60, G06T 7/11, G06F 3/0484, G06N 3/0475, G06T 3/40

(54) **IMAGE PROCESSING METHOD USING GENERATIVE MODEL AND COMPUTING DEVICE FOR PERFORMING SAME**

(30) Priority: 01.08.2023 KR 20230100706; 08.12.2023 KR 20230178039
(71) Applicant: Samsung Electronics Co., Ltd., Suwon-si, Gyeonggi-do 16677 (KR)
(72) Inventor: LEE, Tammy, Suwon-si, Gyeonggi-do 16677 (KR); KONG, Naejin, Suwon-si, Gyeonggi-do 16677 (KR); BAE, Gihyeon, Suwon-si, Gyeonggi-do 16677 (KR); CHO, Hochul, Suwon-si, Gyeonggi-do 16677 (KR)
(74) Representative: Appleyard Lees IP LLP
(86) International application number: PCT/KR2024/011285
(87) International publication number: WO 2025/029057

(57) **Abstract**

A method of editing an image by using a generative model includes receiving a user input for a movement of at least one object included in an input image; expanding the input image in a direction based on the movement of the at least one object; determining a generation required area based on the expanded input image, wherein the generation required area is an area in which generation of a partial image for the at least one object is required; generating the partial image for the at least one object in the generation required area by using at least one generative model; and outputting a recomposed image based on the input image and the partial image for the at least one object..

## Description

### TECHNICAL FIELD

The disclosure relates to a method, apparatus, and system of editing an image by using a generative model, and more particularly, to a method, apparatus, and system of editing an image after an object is transformed when a position or size of the object is transformed in the image.

### BACKGROUND ART

Generative Al technology refers to a technology to learn with patterns and structures of a huge amount of data for training and generate new data similar to input data based on the learning. By using the generative Al technology, an image corresponding to text may be obtained, or an image may expand to an area not included in the original image.

The generative Al technology may be applied to an image processing field to support outpainting or inpainting. Outpainting refers to expanding an image while maintaining the style and content of the image, and inpainting refers to generating an image to fill a specific area inside an image.

With the recent development of an image processing technology focusing on user experience, some devices or programs may support a function to transform, by a user, the positions or sizes of objects included in an image. However, when a part of an object is cut off or an object that does not match with surroundings is displayed in an image after the transformation of the object, user's satisfaction may decrease.

### DISCLOSURE OF INVENTION

### SOLUTION TO PROBLEM

According to an embodiment of the disclosure, a method of image processing by using one or more generative models, the method being executed by at least one processor, the method including: receiving a user input for a movement of at least one object included in an input image; expanding the input image in a direction determined based on the movement of the at least one object; determining a generation required area based on the expanded input image, wherein the generation required area is an area in which generation of a partial image for the at least one object is required; generating an image for the generation required area by using at least one generative model; and outputting a recomposed image based on the input image and the partial image for the at least one object.

According to an embodiment of the disclosure, a computing device includes an input/output interface configured to receive a user input to request processing an input image and output a recomposed image processed according to the user input; a memory to store instructions for processing the input image; and at least one processor configured to execute the instructions, wherein the instructions cause the at least one processor to: receive the user input for a movement of at least one object included in the input image, expand the input image in a direction determined based on the movement of the at least one object; determine a generation required area based on the expanded input image, wherein the generation required area is an area in which generation of a partial image for the at least one object is required; generate an image for the generation required area, by using at least one generative model; and output the recomposed image based on the input image and the partial image for the at least one object..

According to an embodiment of the disclosure, a non-transitory computer-readable recording medium storing instructions, the instructions comprising: one or more instructions that, when executed by at least one processor cause the at least one processor to: receive a user input for a movement of at least one object included in an input image; expand the input image in a direction determined based on the movement of the at least one object; determine a generation required area based on the expanded input image, wherein the generation required area is an area in which generation of a partial image for the at least one object is required; generate an image for the generation required area by using at least one generative model; and output a recomposed image based on the input image and the partial image for the at least one object.

According to an embodiment of the disclosure, a computer program is stored in a medium to perform, on a computer, at least one of embodiments of the disclosed method.

### BRIEF DESCRIPTION OF DRAWINGS

FIG. 1 illustrates a process of editing an image by using a generative model when transforming an object included in the image, according to an embodiment of the disclosure.
FIG. 2 illustrates a process of expanding an image considering inverse-transformation when an object included in the image is reduced, according to an embodiment of the disclosure.
FIG. 3 illustrates a process of expanding an image considering inverse-transformation when an object included in the image is rotated, according to an embodiment of the disclosure.
FIG. 4A illustrates a process of expanding an image based on the size of a selected object, according to an embodiment of the disclosure.
FIG. 4B illustrates a process of expanding an image based on the size of the image, according to an embodiment of the disclosure.
FIG. 5 illustrates a process of expanding an image based on a transformable range of a selected object, according to an embodiment of the disclosure.
FIG. 6 illustrates a process of expanding an image by moving all borders located in an inverse-transformation direction, according to an embodiment of the disclosure.
FIG. 7 illustrates a process of inferring an object proposal area from an image, according to an embodiment of the disclosure.
FIGS. 8 and 9 illustrate processes of inferring an object proposal area based on an input image that is not expanded and expanding the object proposal area considering the inverse-transformation of the object.
FIG. 10 illustrates a process of editing an image by using an object image without change, the object image being generated in a process of expanding an input image considering inverse-transformation with respect to the transformation of an object.
FIG. 11 is a an example configuration of a computing device for performing image edition using a generative model, according to an embodiment of the disclosure.
FIG. 12 is a view illustrating types and roles of generative models, according to an embodiment of the disclosure.
FIGS. 13 to 19 are flowcharts for explaining a process of editing an image by using a generative model, according to embodiments of the disclosure.
FIGS. 20 to 23 are flowcharts for explaining a process of editing an image by using a generative model, according to embodiments of the disclosure.

### MODE FOR THE INVENTION

In the following description, when detailed descriptions about related well-known functions or structures are determined to make the gist of the disclosure unclear, the detailed descriptions will be omitted herein. This is to convey the gist of the disclosure more clearly without obscuring the same by omitting unnecessary explanations. The terms used in the disclosure have been selected from currently widely used general terms in consideration of the functions in the disclosure. However, the terms may vary according to the intention of a user or operator, case precedents, and the like. Accordingly, the terms used in the disclosure are defined based on their meanings in relation to the contents discussed throughout the specification.

Furthermore, each element illustrated in the drawings may be exaggerated, omitted, or schematically illustrated for convenience of explanation, and clarity. The illustrated size of each element does not substantially reflect its actual size. In each drawing, the same or corresponding elements are assigned with the same reference numerals.

The advantages and characteristics of the disclosure, and a method or process to achieve the same, will be clarified by referring to embodiments described below in detail with the accompanying drawings. However, the disclosure is not limited to embodiments described below, but may be implemented in various other forms. The disclosed embodiments are provided to perform the disclosure and to impart a person skilled in the art to which the disclosure belongs of a full scope of the disclosure. An embodiment of the disclosure may be defined according to the scope of claims. Throughout the disclosure, like reference numerals denote like elements. Furthermore, in the description of the disclosure, certain detailed explanations of related art are omitted when it is deemed that they may unnecessarily obscure the essence of the disclosure. The terms used in the disclosure have been selected from currently widely used general terms in consideration of the functions in the disclosure. However, the terms may vary according to the intention of a user or operator, case precedents, and the like. Thus, the definitions are determined based on the overall content of the disclosure.

In an embodiment of the disclosure, it will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block(s). These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block(s). The computer program instructions may also be loaded onto a computer, other programmable instruction execution apparatus.

Furthermore, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

Terms such as "... portion" or "... unit" stated in an embodiment of the disclosure may signify a unit to process at least one function or operation and the unit may be embodied by software or hardware such as a field-programmable gate array (FPGA) or an application-specific integrated circuit (ASIC), and the "... portion" or "... unit" may perform a specific function. Meanwhile, the "... portion" or "... unit" is not limited to software or hardware. The "... portion" or "... unit" may be configured to exist on a storage medium to be addressed or may be configured to regenerate one or more processors. In an embodiment of the disclosure, the "... portion" or "... unit" may include software components, object-oriented software constituent elements, class constituent elements, and task constituent elements, processes, functions, attributes, procedures, sub-routines, segments of program codes, drivers, firmware, microcodes, circuits, data, databases, data structures, tables, arrays, and variables. The constituent elements and functions provided by the "units" may be combined into a smaller number of constituent elements and units or may be further divided into additional constituent elements and units Furthermore, in an embodiment of the disclosure, the "... portion" or "... unit" may include one or more processors.

The embodiments of the disclosure relates to a method or process of editing an image by using a generative model. Before the descriptions of specific embodiments, in the disclosure, the meanings of frequently used terms are defined below.

The term "editing" of an image may refer to processing an image to change at least a partial area of the image. In the embodiments of the disclosure, when an object included in an image is transformed (movement, enlargement, reduction, rotation, etc.), a device performing image processing may generate an image after the object is transformed, which may be expressed to be editing an image. Instead of the "editing" of an image, terms such as "recomposition" of an image and the like may be used.

The "transformation" of an object may include a movement of an object, resizing (e.g., enlargement or reduction) of an object, a rotation of an object, and the like. In the disclosure, exemplary embodiments describe processes involving objects being moved. However, a person of skill in the art will understand that this disclosure is not limited to such embodiments. Furthermore, even in the embodiments in which an object is moved, other types of transformations, such as resize or rotation, may be applied to the object. Instead of the "transformation" of an object, terms such as "change" of an object and the like may be used. Furthermore, instead of the "movement" of an object, terms such as "translation" and the like may be used.

The term "partial object" may refer to an object at least part of which is not displayed on an image. For example, when an object is located at a border of an image so that only a part of the object is displayed on the image and the rest is not displayed on the image, such an object may be referred to as a partial object. Alternatively, for example, when a part of an object is covered by another object or background so as not to be displayed, such an object may be referred to as a partial object. According to an embodiment of the disclosure, a computing device may determine whether an object is a partial object based on whether the object contacts at least one of borders of an image. Furthermore, according to an embodiment of the disclosure, a computing device may recognize an object with respect to an image and then determine whether the object is a partial object based on a result of the recognition of the object. Instead of the "partial object," terms such as an "incomplete object" and the like may be used.

A "full object" may refer to an object whose entire appearance is displayed on an image. Instead of the "full object," terms such as a "complete object," a "whole object," or the like may be used.

"Generative Al (artificial intelligence)" may refer to artificial intelligence technology that may generate new text, an image, and the like in response to input data (e.g., text, an image, etc.). A typical example of generative Al is described below in a "generative model" section.

A "generative model" may refer to a neural network model that implements generative Al technology. A generative model, by learning a pattern and structure of data for training, may generate new data having a characteristic similar to input data or new data corresponding to input data. For example, when input data is an image and a generative model is requested to expand the image, the generative model may generate in an outer area of the original image while maintaining the content or style of the original image. Alternatively, for example, when the input data is text containing a question, the generative model may generate and out an answer to the question.

An "object proposal area" may refer to an area of an image in which an object is determined or expected to exist. According to an embodiment of the disclosure, a computing device that performs image processing may infer, determine, or extract a certain area including an object (e.g., a bounding box) as an object proposal area. Alternatively, the computing device may separate an object from an image through segmentation and infer (determine) that the separated object is only an object proposal area. Alternatively, the computing device may infer (determine) that an object proposal area may include not only an object separated as a result of the segmentation, but also a part of a margin around the object.

A "generation required area" may refer to an area in which the generation of an image is required for editing an image. For example, when an object is moved in an image, it is necessary to generate an image for a part of the object that has been unseen in the original image, and the area for which a new image is generated may correspond to the generation required area. In the embodiments of the disclosure, one or more generative models may generate an image for a generation required area. In the embodiments of the disclosure, by inferring (determining) a minimum area for which the generation of an image is necessary, as a generation required area, an output image may be prevented from being unnatural due to instability of a generative model, or consumption of a lot of time for the generation of an image may be prevented.

"Outpainting" may refer to a technology to expand an external border of an image while maintaining the content and style of the image. In the embodiments of the disclosure, outpainting may be used when expanding an input image considering inverse-transformation.

"Inpainting" may refer to a technology to generate a new image to fill a specific area in an image. In the embodiments of the disclosure, inpainting may be used when generating an image for a generation required area.

In the following description, a method or process of editing an image by using a generative model and a computing device for performing the same, according to embodiments of the disclosure, are described with reference to the accompanying drawings.

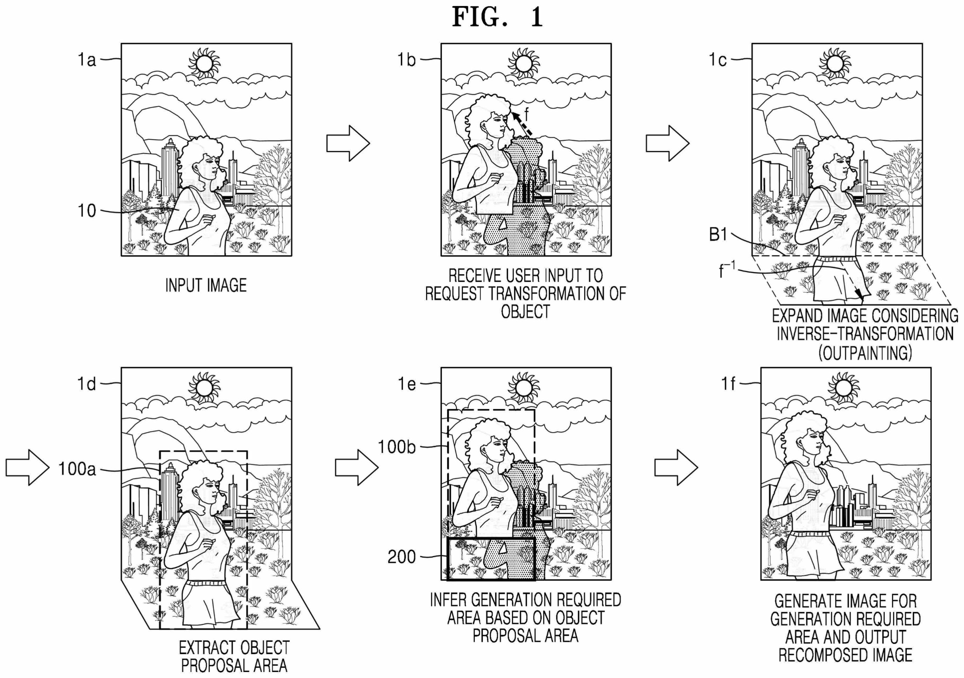

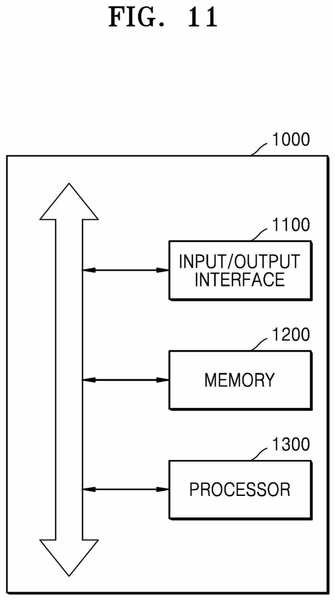

It is assumed that the processes described with reference to FIGS. 1 to 10 are performed by a computing device supporting an image processing function. Accordingly, in the descriptions with reference to FIGS. 1 to 10, a computing device is described as performing processes. Detailed components of a computing device according to an embodiment are illustrated in FIG. 11, which will be described below in detail.

In the embodiments of the disclosure, a computing device may perform outpainting to expand an image, or inpainting when it is necessary to generate a new image (object or background) in an image due to transformation of an object. Although the generation of an image may be performed using one generative model, efficiency and performance may be increased by using generative models each having different characteristics for each level.

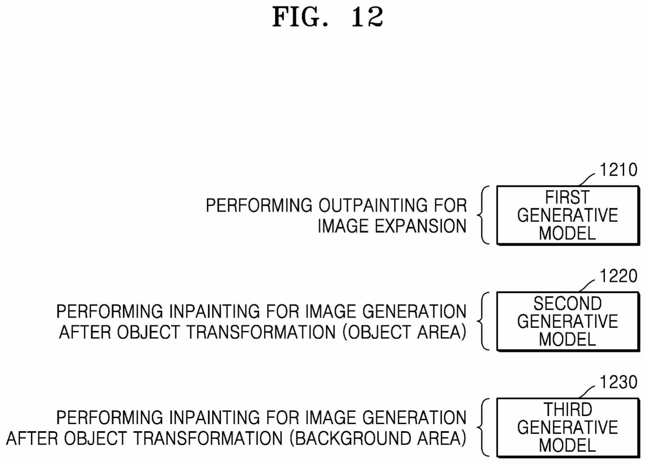

In the embodiments of the disclosure, it is assumed, unless otherwise specified, that an image is edited by using three generative models as illustrated in FIG. 12. Referring to FIG. 12, a first generative model 1210 may be a model to perform outpainting for image expansion. A second generative model 1220 and a third generative model 1230 both are models that may perform inpainting for image generation after object transformation. The second generative model 1220 may be a model to generate an image of an object, and the third generative model 1230 may be a model to generate an image of a background.

According to an embodiment of the disclosure, the first generative model 1210 may be a model focused on a generation speed rather than the quality of an image being generated. For expanding an image to infer (determine) an object proposal area, fast generation is more important than the quality of an image being generated. In contrast, the second generative model 1220 may be a model focused on the quality of an image being generated rather than the generation speed. This is because the image generated by the second generative model 1220 corresponds to an output image. Accordingly, the second generative model 1220 may be a model with high performance compared with the first generative model 1210. Furthermore, the first generative model 1210 may be a model with low quality of output data but fast generation speed, compared with the second generative model 1220. Furthermore, as an image of an object rather than a background may have more effect on the entire quality of an image, the second generative model 1220 may be a model with high performance compared with the third generative model 1230. It is obvious that even processes described to use different generative models in the following embodiments may be performed by using one generative model or several identical generative models.

FIG. 1 is a view for explaining a process of editing an image by using a generative model when transforming an object included in the image, according to an embodiment of the disclosure. FIG. 1 illustrates images respectively corresponding to a first operation 1a to a sixth operation 1f according to an image processing order.

Referring to FIG. 1, in the first operation 1a, a computing device may obtain an input image including an object 10. In the second operation 1b, the computing device may receive a user input to request a transformation of an object. For example, a user may request a movement of the object 10 by touching with a finger the object 10 on a screen of the computing device, on which the input image is displayed, and moving the finger in a touch state. The user input may be configured by selecting (specifying) the object 10 in various ways and requesting a transformation of the object 10. (e.g., while a pointer is located on an object, a mouse's button is clicked, and while maintaining a click state, the pointer is moved)

In the embodiment disclosed in FIG. 1, a transformation of the object 10 requested by a user is a movement (translation) of an object, but the disclosure is not limited thereto, and the user may request resizing (enlargement or reduction) or rotation of the object 10.

In the third operation 1c, a computing device may expand an input image considering transformation (movement) requested by the user, or considering inverse-transformation with respect to the transformation requested by the user. In other words, the computing device may expand an input image in a direction that is determined based on the movement of an object requested by the user. In order to expand the input image, the computing device may perform outpainting by using the first generative model 1210 described above. In order for the first generative model 1210 to perform outpainting, the computing device may input a prompt to instruct outpainting to the first generative model 1210. For example, the computing device may input to the first generative model 1210 a prompt indicating to expand the input image by moving a certain border of the borders of the input image by a certain distance in a certain direction, and to generate an image for an expanded area while maintaining the features of the input image (e.g., an overall atmosphere, the contents of a foreground and a background, etc.). The computing device may generate a prompt instructing outpainting based on the user input (transformation request) and the input image. In other words, the computing device may generate a prompt instructing the first generative model 1210 to perform outpainting according to a method or process described in the embodiments below. A detailed method or process in which a computing device expands an input image considering inverse-transformation in the third operation 1c is described below in detail.

The computing device may determine whether the object 10 of which transformation (movement) is requested by a user, that is, the object 10 selected by a user input, is in contact with at least one of borders of the input image. Referring to FIG. 1, it may be seen that, among the borders of the input image, a first border B1 is in contact with the object 10. Accordingly, the computing device may select the first border B1 in contact with the object 10 among the borders of the input image.

The computing device may move the first border B1 by a distance and in a direction according to inverse-transformation with respect to the transformation (movement) according to the user input. In other words, the computing device may move the first border B1 in a direction opposite to the movement (distance and direction) of the object 10 requested by the user input in the second operation 1b. In the second operation 1b, the user input received by the computing device includes a transformation request to move the object 10 in an upper-left diagonal direction. Accordingly, the computing device may move the first border B1 in a lower-right diagonal direction. In this state, a distance in which the first border B1 is moved may be determined based on a distance in which the object 10 is moved according to the user input, in the second operation 1b. For example, a distance in which the first border B1 is moved may be the same as the distance in which the object 10 is moved according to the user input, in the second operation 1b.

When the first border B1 is moved according to inverse-transformation, the computing device may expand the input image by generating (outpainting) an image to an area where the first border B1 is moved, by using the first generative model 1210. In other words, the computing device may input, to the first generative model 1210, a prompt instructing to generate an image to the area where the first border B1 is moved, while maintaining the feature of the input image.

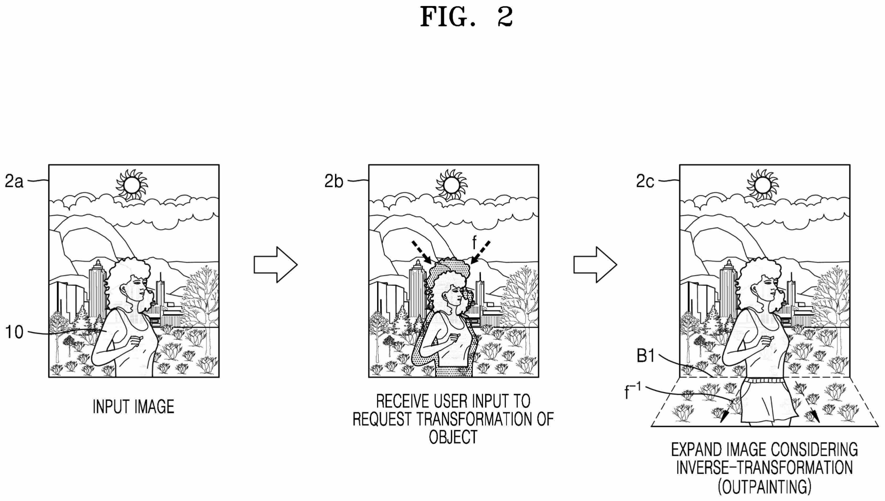

The computing device may expand the input image according to various methods. Furthermore, even when not a movement, but transformation (resizing, rotation, etc.) of a different type is applied to the object 10, the method or process in which the computing device expands the input image may vary. This is described in detail with reference to FIGS. 2 to 6.

FIG. 2 is a view for explaining a method or process of expanding an image considering inverse-transformation when an object included in the image is reduced, according to an embodiment of the disclosure. FIG. 2 illustrates images respectively corresponding to a first operation 2a to a third operation 2c according to an image processing order.

Referring to FIG. 2, in the first operation 2a, the computing device may obtain an input image including the object 10. In the second operation 2b, the computing device may receive a user input to request a reduction of the object 10. For example, the user may request the reduction of the object 10 by touching the object 10 with two fingers and performing a pinch-in operation on the screen of the computing device on which the input image is displayed.

In the third operation 2c, the computing device may expand the input image considering inverse-transformation with respect to the transformation (reduction) requested by the user. In detail, the computing device may determine whether the object 10 of which reduction is requested by the user, that is, the object 10 selected by the user input, is in contact with at least one of the borders of the input image. Referring to FIG. 2, it may be seen that, among the borders of the input image, the first border B1 is in contact with the object 10. Accordingly, the computing device may select the first border B1 in contact with the object 10 among the borders of the input image.

The computing device may move the first border B1 according to inverse-transformation with respect to transformation (reduction) according to the user input. In other words, the computing device may move the first border B1 such that the input image expands in a direction toward the first border B1 as much as a ratio at which the object 10 is reduced by the user input. (e.g., when the size of the object 10 is reduced by 15% according to a user input, the computing device moves the first border B1 such that the input image expands by 15% in a direction toward the first border B1) Accordingly, as illustrated in the image of the third operation 2c, the computing device may extends the length of the first border B1 while moving the first border B1 in a direction away from the center of the object 10.

When the first border B1 is moved according to inverse-transformation, the computing device may expand the input image by generating an image to the area where the first border B1 is moved, by using the first generative model 1210.

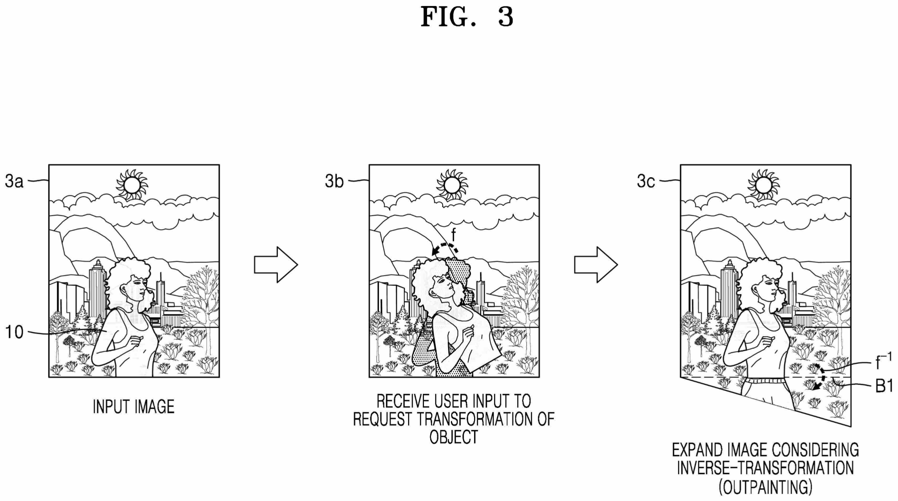

FIG. 3 is a view for explaining a method or process of expanding an image considering inverse-transformation when an object included in the image is rotated, according to an embodiment of the disclosure. FIG. 3 illustrates images respectively corresponding to a first operation 3a to a third operation 3c according to an image processing order.

Referring to FIG. 3, in the first operation 3a, the computing device may obtain an input image including the object 10. In the second operation 3b, the computing device may receive a user input to request a rotation of the object 10. For example, the user may rotate the object 10 on the screen of the computing device on which the input image is displayed, while touching the object 10 with two fingers and maintaining the touch.

In the third operation 3c, the computing device may expand the input image considering inverse-transformation with respect to transformation (rotation) requested by the user. In detail, the computing device may determine whether the object 10 of which rotation is requested by the user, that is, the object 10 selected by the user input, is in contact with at least one of the borders of the input image. Referring to FIG. 3, it may be seen that, among the borders of the input image, the first border B1 is in contact with the object 10. Accordingly, the computing device may select the first border B1 in contact with the object 10 among the borders of the input image.

The computing device may move the first border B1 according to inverse-transformation with respect to the transformation (rotation) according to the user input. In other words, the computing device may move the first border B1 opposite to the rotation (direction and angle) of the object 10 requested by the user input in the second operation 3b. The user input received in the second operation 3b requests the object 10 to rotate in a counterclockwise direction. Accordingly, as illustrated in the image of the third operation 3c, the computing device may move the first border B1 by rotating the first border B1 in a clockwise direction around a left end of the first border B1 as an axis. In this state, the size of an angle at which the first border B1 rotates may be determined based on the size of an angle at which the object 10 rotates according to the user input in the second operation 3b. For example, the size of an angle at which the first border B1 rotates may be the same as the size of an angle at which the object 10 rotates according to the user input, in the second operation 3b.

When the first border B1 is moved according to inverse-transformation, the computing device may expand the input image by generating an image to the area where the first border B1 is moved, by using the first generative model 1210.

According to an embodiment of the disclosure, when the object 10 is selected by user input, the computing device may expand the input image even before a transformation request for the object 10 is received. For example, a user may touch with a finger the object 10 included in the input image for a certain time or more, and move the finger while maintaining a touch state, thereby requesting the movement of the object 10, and in this state, the computing device may expand the input image in advance before the user moves the finger. It may take some time for the user to determine how to transform the object 10 (e.g., where the object 10 is moved) after selecting the object 10 (touching for a certain time or more). Thus, before the user makes a decision on the transformation, the computing device may expand the image in advance, and thus, an image editing speed may be improved. From the user's perspective, a time to output an edited image is reduced, and thus, user experience may be improved.

According to an embodiment of the disclosure, the computing device may expand the input image in advance before receiving a user input to select the object 10 or request a transformation of the object 10, and then, when receiving the user input, may infer (determine) an object proposal area based on the user input. For example, the computing device may expand the original image by a predetermined ratio (e.g., 1.5 times) through outpainting, temporarily store the expanded original image, and when receiving a user input, perform a process to infer or determine an object proposal area.

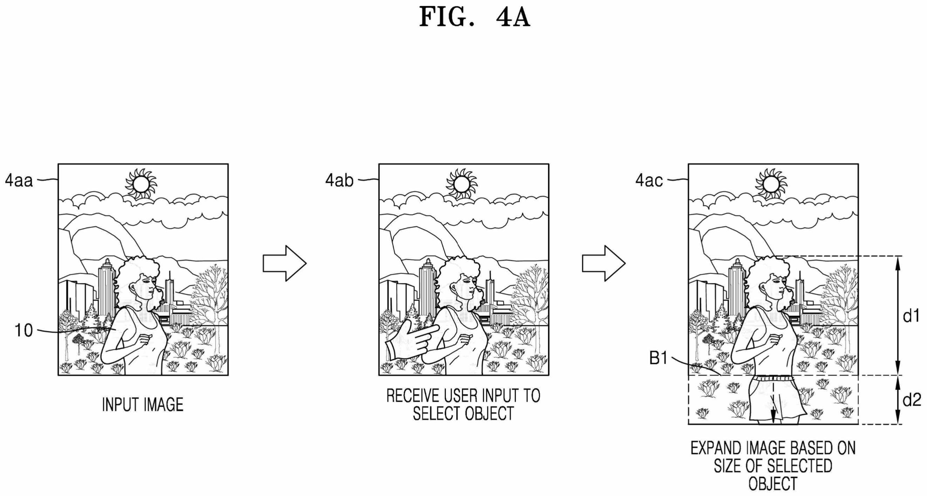

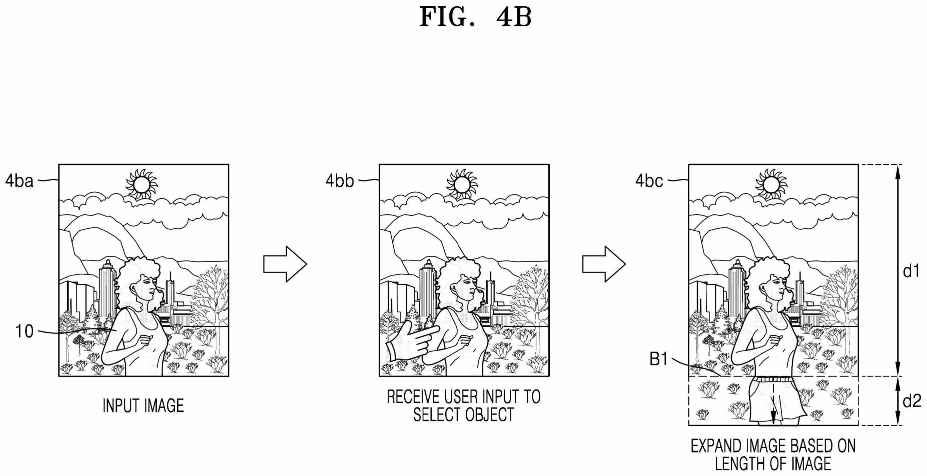

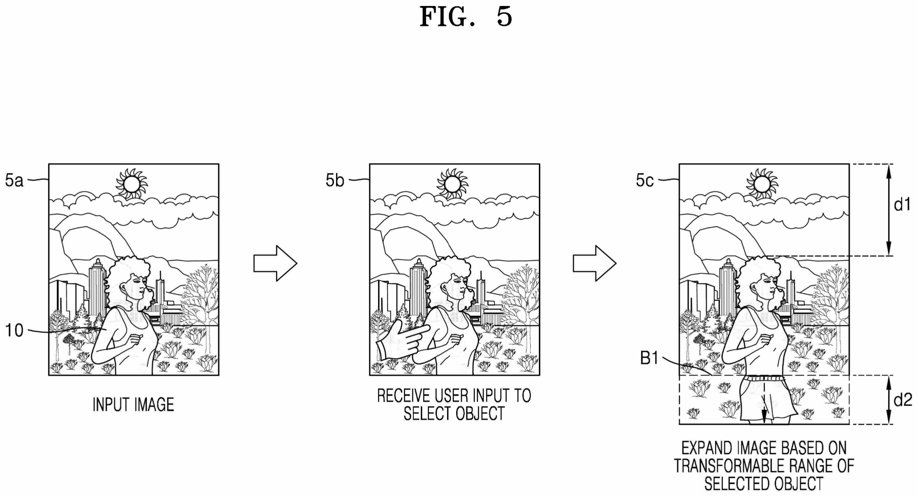

As such, when an input image is expanded in a state in which the object 10 to be transformed is only selected, but a specific transformation request has not been received, the computing device may not consider inverse-transformation. Accordingly, according to an embodiment of the disclosure, the computing device may expand an image based on the size or position of the selected object 10, the size of the input image, or the like. For example, the computing device may move the border of an input image by a distance determined according to the length (a length measured based on an axis parallel to the movement direction of the boarder) of the selected object 10, or by a distance determined based on a transformable range of the selected object 10 within the input image (e.g., based on how the object 10 can move in which direction within the input image). Alternatively, the computing device may move the board of the input image by a distance that is determined based on the length (width or height) of the input image. Hereinafter, detailed descriptions will be provided with reference to FIGS. 4A, 4B, and 5.

FIG. 4A is a view for explaining a method or process of expanding an image based on the size of a selected object, according to an embodiment of the disclosure. FIG. 4A illustrates images respectively corresponding to a first operation 4aa to a third operation 4ac according to an image processing order

Referring to FIG. 4A, in the first operation 4aa, the computing device may obtain an input image including the object 10. In the second operation 4ab, the computing device may receive a user input to select the object 10. For example, the user touches the object 10 for a certain time or more with a finger in the second operation 4ab, so as to select the object 10 as a transformation target, but does not yet made an input to request a transformation (movement, resizing, rotation, etc.) of the object 10. Furthermore, according to an embodiment of the disclosure, in the second operation 4ab, the computing device may receive a user input to request a transformation of the object 10.

In the third operation 4ac, the computing device may expand the input image based on the size of the object 10. In order to expand the input image, the computing device may determine whether the selected object 10 is in contact with at least one of the borders of the input image. Referring to FIG. 4A, it may be seen that, among the borders of the input image, the first border B1 is in contact with the object 10. Accordingly, the computing device may select the first border B1 in contact with the object 10 among the borders of the input image.

The computing device may move the first border B1 in a direction away from the center of the object 10, and may determine a distance in which the first border B1 is moved, based on the size of the object 10. According to an embodiment of the disclosure, the computing device may measure a length d1 of the object 10 based on an axis parallel to the movement direction of the first border B1. Furthermore, according to an embodiment of the disclosure, the computing device may measure the length d1 of the object 10 based on an axis perpendicular to the first border B1.

The computing device may move the first border B1 by a distance d2 obtained by multiplying the length d1 of the object 10 that is measured, by a preset ratio (e.g., 0.2). In this state, the preset ratio used for calculating the distance d2 may be set to an appropriate value according to conditions, such as required image quality, a processing speed, and the like.

When the first border B1 is moved, the computing device may expand the input image by generating an image to the area where the first border B1 is moved, by using the first generative model 1210.

FIG. 4B is a view for explaining a method or process of expanding an image based on the size of the image, according to an embodiment of the disclosure. FIG. 4B illustrates images respectively corresponding to a first operation 4ba to a third operation 4bc according to an image processing order

Referring to FIG. 4B, in the first operation 4ba, the computing device may obtain an input image including the object 10. In the second operation 4bb, the computing device may receive a user input to select the object 10. For example, the user touches the object 10 for a certain time or more with a finger in the second operation 4bb so as to select the object 10 as a transformation target, but does not yet made an input to request a transformation (movement, resizing, rotation, etc.) of the object 10 Furthermore, according to an embodiment of the disclosure, in the second operation 4bb, the computing device may receive a user input to request a transformation of the object 10.

In the third operation 4bc, the computing device may expand the input image based on the size of the input image. For example, the computing device may expand the input image based on the length (width or height) of the input image. In order to expand the input image, the computing device may determine whether the selected object 10 is in contact with at least one of the borders of the input image. Referring to FIG. 4B, it may be seen that, among the borders of the input image, the first border B1 is in contact with the object 10. Accordingly, the computing device may select the first border B1 in contact with the object 10 among the borders of the input image.

The computing device may move the first border B1 in a direction away from the center of the object 10, and may determine a distance to move the first border B1 based on the length (width or height) of the input image. According to an embodiment of the disclosure, the computing device may measure the length d1 of the input image based on an axis perpendicular to the first border B1. Furthermore, according to an embodiment of the disclosure, the computing device based on an axis parallel to the movement direction of the first border B1 may measure the length d1 of the input image.

The computing device may move the first border B1 by the distance d2 obtained by multiplying the length d1 of the image that is measured, by a preset ratio (e.g., 0.1). In this state, the preset ratio used for calculating the distance d2 may be set to an appropriate value according to a condition, such as required image quality, a processing speed, and the like.

When the first border B1 is moved, the computing device may expand the input image by generating an image to the area where the first border B1 is moved, by using the first generative model 1210.

FIG. 5 is a view for explaining a method or process of expanding an image based on a transformable range of a selected object, according to an embodiment of the disclosure. FIG. 5 illustrates images respectively corresponding to a first operation 5a to a third operation 5c according to an image processing order.

Referring to FIG. 5, in the first operation 5a, the computing device may obtain an input image including the object 10. In the second operation 5b, the computing device may receive a user input to select the object 10. For example, the user touches the object 10 for a certain time or more with a finger in the second operation 5b so as to select the object 10 as a transformation target, but does not yet made an input to request a transformation (movement, resizing, rotation, etc.) of the object 10 Furthermore, according to an embodiment of the disclosure, in the second operation 5b, the computing device may receive a user input to request a transformation of the object 10.

In the third operation 5c, the computing device may expand the input image based on a transformable range of the object 10. In detail, the computing device may determine a transformable (e.g., movable) range of the object 10 within the input image based on the size and position of the object 10, and may expand the input image based on the determined range.

In order to expand the input image, the computing device may determine whether the selected object 10 is in contact with at least one of the borders of the input image. Referring to FIG. 5, it may be seen that, among the borders of the input image, the first border B1 is in contact with the object 10. Accordingly, the computing device may select the first border B1 in contact with the object 10 among the borders of the input image.

The computing device may move the first border B1 in a direction away from the center of the object 10, and determine a distance to move the first border B1 based on the transformable range of the object 10. According to an embodiment of the disclosure, in the third operation 5c, the computing device may measure a distance d1 in which the object 10 is movable, based on an axis parallel to the movement direction of the first border B1. The computing device may move the first border B1 by the distance d2 obtained by multiplying the distance d1 that is measured, by a preset ratio (e.g., 1). In this state, the preset ratio used for calculating the distance d2 may be set to an appropriate value according to a condition, such as required image quality, a processing speed, and the like.

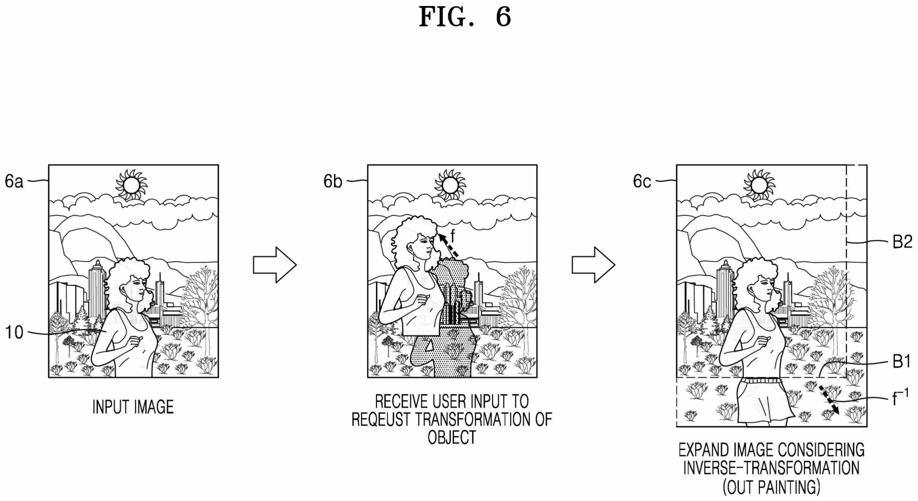

FIG. 6 is a view for explaining a method or process of expanding an image by moving all borders located in an inverse-transformation direction, according to an embodiment of the disclosure. FIG. 6 illustrates images respectively corresponding to a first operation 6a to a third operation 6c according to an image processing order.

Referring to FIG. 6, in the first operation 6a, the computing device may obtain an input image including the object 10. In the second operation 6b, the computing device may receive a user input to request a movement of the object 10. For example, the user may request a movement of the object 10 by touching the object 10 on the screen of the computing device on which the input image is displayed, and moving a finger while maintaining a touch state.

In the third operation 6c, the computing device may expand the input image considering inverse-transformation with respect to the transformation (movement) requested by the user. In detail, the computing device may select all borders located in an inverse-transformation direction among the borders of the input image. In the second operation 6b, the user input received by the computing device includes a transformation request to move the object 10 in an upper-left diagonal direction. As the inverse-transformation direction is towards a lower right, the computing device may select a first border B1 and a second border B2 located in the lower and right sides.

The computing device may move the first border B1 and the second border B2 by a distance and in a direction according to inverse-transformation with respect to the transformation (movement) according to the user input. For example, the computing device may move the first border B1 downward by a distance in which the object 10 is moved upward according to the received user input, in the second operation 6b. Similarly, the computing device may move the second border B2 to the right by a distance in which the object 10 is moved in the left direction according to the received user input, in the second operation 6b.

When the first border B1 and the second border B2 are moved according to the inverse-transformation, the computing device may expand the input image by generating an image to an area in which the first and second borders B1 and B2 are moved, by using the first generative model 1210.

Various methods of expanding an input image are discussed above. Referring back to FIG. 1, in the third operation 1c, when the input image is expanded, the computing device may infer or determine an object proposal area 100a in the fourth operation 1d. The image included in the area expanded in the third operation 1c may be used as a guide later when inpainting is performed (e.g., generating an image for a generation required area) after object transformation. In other words, when performing inpainting later after object transformation, the computing device may refer to the image generated when expanding the input image in the third operation 1c, and thus, image generate efficiency may be increased.

As described above, the object proposal area may refer to an area in which the object 10 is determined or expected to exist in an image. The computing device may infer (determine) that an area including the object 10 in the expanded input image as the object proposal area 100a. According to an embodiment of the disclosure, the computing device may infer (determine) that an object proposal area 100b corresponding to the object 10 transformed (moved) in the fifth operation 1e, based on the object proposal area 100a inferred in the fourth operation 1d. For convenience of explanation, it is assumed that the object proposal area 100a inferred in the fourth operation 1d is a first object proposal area, and that the object proposal area 100b inferred in the fifth operation 1e is a second object proposal area.

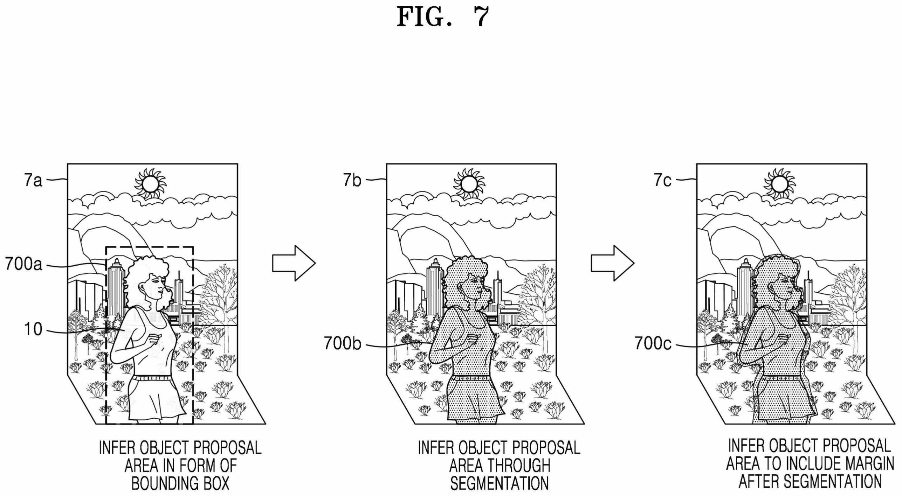

In the fourth operation 1d, the computing device may infer or determine the object proposal area 100a in the form of a bounding box. According to an embodiment of the disclosure, the computing device may infer (determine) a bounding box including the object 10 as the first object proposal area 100a through a method or process used in a general pedestrian detection technology, and may infer (determine) the first object proposal area 100a through various other methods. Furthermore, according to an embodiment of the disclosure, the computing device may infer (determine) the first object proposal area 100a in a form other than the bounding box, which is described in detail with reference to FIG. 7.

FIG. 7 is a view for explaining a method or process of inferring an object proposal area from an image, according to an embodiment of the disclosure. FIG. 7 illustrates three different examples of methods of inferring an object proposal area in first to third screens 7a, 7b, and 7c.

The first screen 7a of FIG. 7 illustrates an example in which the computing device infers an object proposal area 700a in the form of the bounding box including the object 10. This is the same as the method or process described in the fourth operation 1d of FIG. 1.

The second screen 7b of FIG. 7 illustrates an example in which the computing device separates the object 10 through segmentation and infers only the separated object 10 as an object proposal area 700b.

The third screen 7c of FIG. 7 illustrates an example in which the computing device separates the object 10 through segmentation and infers an object proposal area 700c to include not only the separated object 10, not also a part of a margin around the object 10.

In the embodiments illustrated in FIGS. 1 and 8 to 10, the computing device may infer (determine) an object proposal area in the form of a bounding box, but the computing device may infer (determine) an object proposal area in the two different methods illustrated in FIG. 7, and the object proposal area may be inferred in various other methods.

Referring back to FIG. 1, when inferring the first object proposal area 100a from the expanded input image in the fourth operation 1d, the computing device may transform the object 10 and infer the object proposal area 100b corresponding to the object 10 in the fifth operation 1e.

An operation performed by the computing device in the fifth operation 1e is described below in detail. The computing device may transform the object 10 according to a request included in the user input received in the second operation 1b. In other words, the computing device may move the object 10 in an upper left direction on the input image. The computing device may infer (determine) the second object proposal area 100b corresponding to the object 10 at a position after movement, based on the first object proposal area 100a inferred beforehand. For example, the computing device may infer (determine) the second object proposal area 100b corresponding to the object 10 that is moved, by reflecting the size and shape of the first object proposal area 100a, a positional relationship between the first object proposal area 100a and the object 10, and the like. According to an embodiment of the disclosure, as the object 10 included in the second object proposal area 100b is extracted from the input image that is not expanded, the object may be smaller than the object 10 included in the first object proposal area 100a. However, as illustrated in FIG. 1, as the second object proposal area 100b may have the same size as that of the first object proposal area 100a, an area 200 that requires generation of an additional image of the object 10 may exist in the second object proposal area 100b. The computing device may infer (determine) the area 200 as a generation required area. Alternatively, for example, the computing device may infer (determine) the second object proposal area 100b by moving the first object proposal area 100a by a distance and in a direction in which the object 10 is moved, according to according to a user's request.

The computing device may infer (determine) the generation required area 200 based on the second object proposal area 100b. In detail, the computing device may infer (determine) an area in which an image for the object 10 that is transformed is additionally generated, as the generation required area 200, by comparing the object 10 that is transformed with the second object proposal area 100b.

As described above, the generation required area may refer to an area in which the generation of an image is required for editing an image. According to an embodiment of the disclosure, the generation required area may be divided into an object part and a background part, and in the fifth operation 1e of FIG. 1, it may be assumed that a part 200 in which additional generation of an image of the object 10 is required is a first generation required area, and that empty spaces generated due to the transformation (movement) of the object 10 (a part in which additional generation of a background image is required) are second generation required areas. In other words, the computing device may infer (determine) an area in which a background image is generated due to the transformation of the object 10, as the second generation required area.

Accordingly, in the fourth operation 1d and the fifth operation 1e, the computing device may infer (determine) an area including the object 10 in the expanded input image, as the first object proposal area 100a, and may move (transform) the object 10 in the input image according to the user input received in the second operation 1b. The computing device may infer (determine) the second object proposal area 100b corresponding to the object 10 that is moved, based on the first object proposal area 100a. Lastly, the computing device may infer the generation required area 200 and the second generation required area (empty spaces generated due to the movement of the object 10) based on the second object proposal area 100b.

According to an embodiment of the disclosure, the computing device may infer the generation required area 200 considering the object 10. For example, the computing device may determine an area in which the generation of an image of the object 10 is required, based on the size of the object 10 and the direction of the object 10 (e.g., a direction toward the front surface of the object 10), and may infer the determined area as the generation required area 200. Alternatively, for example, the computing device the object 10 may identify the object 10 (e.g., identify the type of an object) by performing object recognition on an input image, determine an area in which the generation of an image of the object 10 is required, based on an identification result (e.g., the type of an object) of the object 10, and infer the determined area as the generation required area 200.

In the sixth operation 1f, the computing device may generate images for the first generation required area 200 and the second generation required area (empty spaces generated due to the movement of the object 10) and emit the images, and output the edited images. According to an embodiment of the disclosure, as described above with reference to FIG. 12, the computing device may generate an image for the first generation required area 200 by using the second generative model 1220, and generate an image for the second generation required area by using the third generative model 1230.

According to an embodiment of the disclosure, in the fifth operation 1e, the computing device may infer the entire second object proposal area 100b as a generation required area. Accordingly, the computing device may newly generate an image for the entire second object proposal area 100b by using the second generative model 1220, for generation of an object image. In this case, as an image for the entire second object proposal area 100b is generated by reflecting a surrounding background at a position after the transformation of the object 10, an effect of generating an image more suitable for the surrounding background may be expected.

According to an embodiment of the disclosure, in the sixth operation 1f, the computing device may input a prompt instructing inpainting for a generation required area to a generative model. For example, the computing device may generate a prompt instructing generation of an image while maintaining the characteristics of an input image (e.g., overall atmosphere, the contents of the foreground and the background, etc.) for the first generation required area 200 inferred in the fifth operation 1e, and input the prompt to the second generative model 1220. To this end, the computing device may generate a prompt instructing inpainting based on the user input (transformation request) and the input image.

As described above, the image generated during the expansion of the input image in the third operation 1c may be used as a guide for the generation of the image for the first generation required area 200. According to an embodiment of the disclosure, the computing device may generate an image of the object 10in the first generation required area 200, similar to an image of the object 10 included in the input image expanded in the third operation 1c and suitable for the background in the first generation required area 200. To this end, the computing device may generate a prompt instructing to generate an image for the first generation required area 200 while maintaining the characteristics of the image of the area expanded in the third operation 1c, and input the prompt to the second generative model 1220.

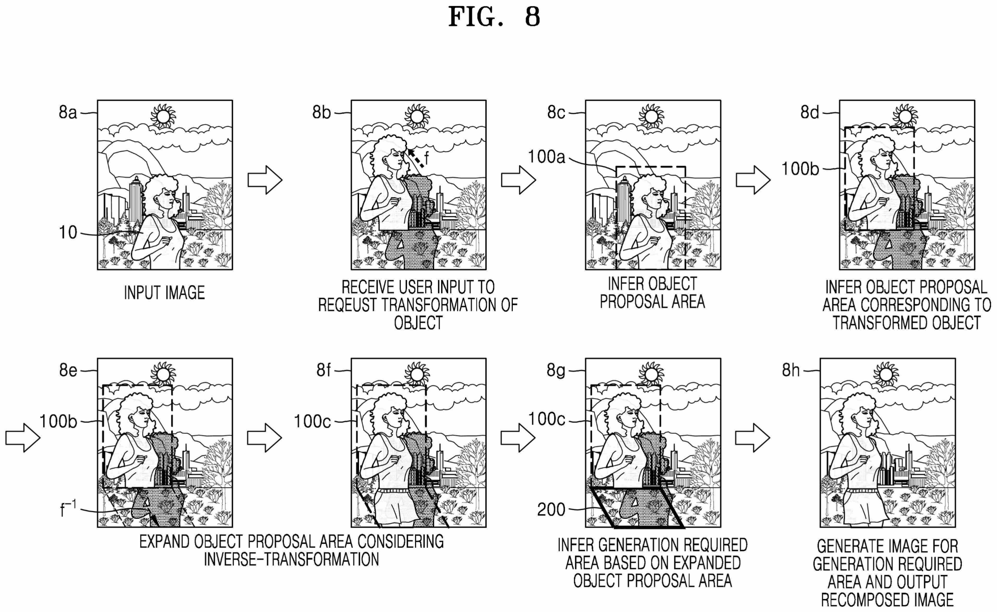

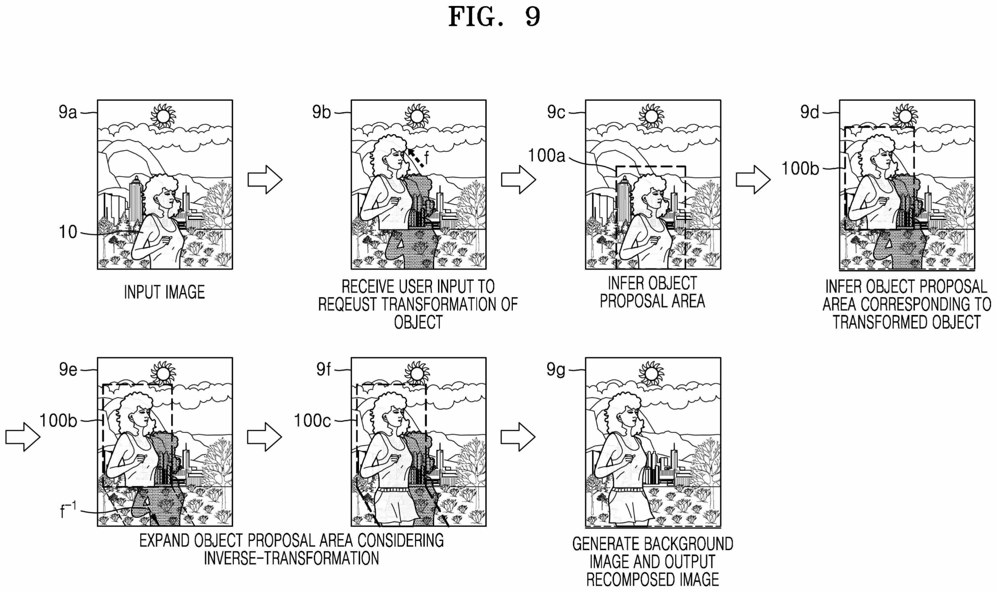

So far, described are the embodiments in which an input image is expanded and then an object proposal area is inferred considering the transformation of the object 10, or considering inverse-transformation with respect to the transformation of the object 10. In the following description, embodiments in which an object proposal area is inferred without expanding an input image, and the object proposal area is expanded considering inverse-transformation with respect to the transformation of the object 10, are described with reference to FIGS. 8 and 9. According to these embodiments, as an image (image in an object proposal area) is expanded by reflecting the surrounding background of the object 10 that is transformed, compared with the embodiment described above by referring to FIG. 1, an effect of generating an image such that the object 10 is more suitable for the surrounding background may be expected.

FIGS. 8 and 9 are views for explaining embodiments of a method or process of inferring an object proposal area based on an input image that is not expanded and expanding the object proposal area considering the inverse-transformation of the object. FIG. 8 illustrates images respectively corresponding to a first operation 8a to an eighth operation 8h according to an image processing order

FIG. 9 illustrates images respectively corresponding to a first operation 9a to a seventh operation 9g according to an image processing order

Referring to FIG. 8, in a first operation 8a, the computing device may obtain an input image including the object 10. In the second operation 8b, the computing device may receive a user input to request a transformation of an object. For example, a user may touch the object 10 on the screen of the computing device on which the input image is displayed and move a finger while maintaining a touch state, thereby requesting a movement of the object 10. In the embodiment disclosed in FIG. 8, the transformation of the object 10 requested by the user is a movement of an object, but the disclosure is not limited thereto, and the user may request resizing (enlargement or reduction) or rotation of the object 10.

In the third operation 8c, the computing device may infer an area including the object 10 in the input image, as the object proposal area 100a. According to an embodiment of the disclosure, the computing device may infer the object proposal area 100b corresponding to the object 10 transformed (moved) in the fourth operation 8d, based on the object proposal area 100a inferred in the third operation 8c. For convenience of explanation, it is assumed that the object proposal area 100a inferred in the third operation 8c is a first object proposal area, and the object proposal area 100b inferred in in the fourth operation 8d is a second object proposal area.

In the third operation 8c, the computing device may infer the first object proposal area 100a in the form of a bounding box. According to an embodiment of the disclosure, the computing device may infer the bounding box including the object 10 as the first object proposal area 100a by a method or process used in a general pedestrian detection technology, and may infer the first object proposal area 100a through various other methods. Furthermore, according to an embodiment of the disclosure, the computing device may infer the first object proposal area 100a in a form other than the bounding box, which is as described above with reference to FIG. 7.

The computing device may infer the first object proposal area 100a from the input image in the third operation 8c, and then, in the fourth operation 8d, transform the object 10 and infer the second object proposal area 100b corresponding to the object 10 that is transformed.

An operation performed by the computing device in the fourth operation 8d is described below in detail. The computing device may transform the object 10 according to the request included in the user input received in the second operation 8b. In other words, the computing device may move the object 10 in the upper left direction on the input image. The computing device may infer the second object proposal area 100b corresponding to the object 10at a position after the movement, based on the first object proposal area 100a that is previously extracted. For example, the computing device may infer the second object proposal area 100b corresponding to the object 10 that is moved, by reflecting the size and shape of the first object proposal area 100a, a positional relationship between the first object proposal area 100a and the object 10, and the like.

In the fifth operation 8e, the computing device may expand the second object proposal area 100b considering inverse-transformation with respect to the transformation of the object 10. The method or process of expanding the second object proposal area 100b considering the inverse-transformation may be similar to the method or process described above with reference to the third operation 1c of FIG. 1, and FIGS. 2 to 6. In the embodiments above, among the borders of the input image, at least one border in contact with the object 10 is moved by a distance and in a direction according to the inverse-transformation. In the fifth operation 8e of FIG. 8, among the borders of the second object proposal area 100b, at least one border in contact with the object 10 may be moved by a distance and in a direction according to the inverse-transformation, and an image may be generated (outpainting) to an area in which the border is moved, by using the first generative model 1210. The method or process of moving the border according to the transformation of the object 10 may be the same as that described above in the embodiments. The second object proposal area 100c that is expanded considering inverse-transformation is illustrated in the sixth operation 8f.

In the seventh operation 8g, the computing device may infer the generation required area 200 based on the second object proposal area 100c that is expanded. The method or process in which the computing device infers the generation required area 200 is described below in detail. The computing device may transform (move) the object 10 according to the request included in the user input, and apply the second object proposal area 100c that is expanded, to the object 10 that is transformed. The computing device may infer an area in which an image for the object 10 that is transformed is additionally generated, as the generation required area 200, by comparing the object 10 that is transformed with the second object proposal area 100c that is expanded. As the object 10 included in the second object proposal area 100c that is expanded in the seventh operation 8g is extracted from the input image that is not expanded, the object 10 may be smaller than the object 10 included in the second object proposal area 100c that is expanded in the sixth operation 8f. Accordingly, the area 200 in which generation of an additional image of the object 10 is required may exist in the second object proposal area 100c that is expanded. The computing device may infer the area 200 as a generation required area.

Accordingly, the computing device may infer the generation required area 200 based on the second object proposal area 100c that is expanded. In detail, the computing device may infer an area in which an image for the object 10 that is transformed is additionally generated, as the generation required area 200, by comparing the object 10 that is transformed with the second object proposal area 100c that is expanded.

According to an embodiment of the disclosure, the generation required area may be divided into an object part and a background part, and in the seventh operation 8g of FIG. 8, it may be assumed that a part 200 in which additional generation of an image of the object 10 is required is a first generation required area, and that empty spaces generated due to the transformation (movement) of the object 10 (a part in which additional generation of a background image is required) are second generation required areas. In other words, the computing device may infer an area in which a background image is generated due to the transformation of the object 10, as a second generation required area.

In the eighth operation 8h, the computing device may generate images for the first generation required area 200 and the second generation required area (empty spaces generated due to the movement of the object 10) and emit the images, and output the edited images. According to an embodiment of the disclosure, as described above with reference to FIG. 12, the computing device may generate an image for the first generation required area 200 by using the second generative model 1220, and generate an image for the second generation required area by using the third generative model 1230.

According to the embodiment described above, as the second object proposal area 100b is expanded in the fifth operation 8e, the expanded second object proposal area 100c of the sixth operation 8f includes the image of the object 10 that is already expanded. However, the computing device infers the generation required area 200 by comparing the object 10 (object whose position only is moved due to transformation) before the expansion with the second object proposal area 100c that is expanded, in the seventh operation 8g, and expands the object 10 by generating an image for an image for the generation required area 200 by using the second generative model 1220. A reason therefor is described below.

The image included in the second object proposal area 100c that is expanded in the sixth operation 8f is an image generated by using the first generative model 1210. As described above, the first generative model 1210 is a model used to "temporarily" expand an image to infer (determine) the generation required area 200. In contract, the second generative model 1220 is a model used to generate an image to be output, and may generate an image more precisely than the first generative model 1210. Accordingly, the computing device may expand the second object proposal area 100b by using the first generative model 1210 and then infer the generation required area 200 based on the second object proposal area 100c that is expanded, and generate an image for the generation required area 200 by using the second generative model 1220 again, thereby improving the quality of an output image.

According to an embodiment of the disclosure, the generation required area 200 may be inferred in the seventh operation 8g, and while omitting a process of generating an image for the generation required area 200, an output image may be generated by using the image in the second object proposal area 100c that is expanded in the sixth operation 8f, without change. Such an embodiment is illustrated in FIG. 9.

Comparing FIG. 9 with FIG. 8, all other steps are identical except that the seventh operation 8g of FIG. 8 is omitted. Accordingly, descriptions about the same steps are omitted, and only the sixth operation 9f and the seventh operation 9g of FIG. 9 are described.

In the sixth operation 9f, the computing device may infer (determine) only the empty spaces generated due to the transformation (movement) of the object 10 (a part in which additional generation of a background image is required) as generation required areas (second generation required areas). In the seventh operation 9g, the computing device may use, without change, the image of the object 10 included in the second object proposal area 100c that is expanded, and generate images for the second generation required areas by using the third generative model 1230 and output the edited images.

In the following description, a difference between the method or process according to the embodiment illustrated in FIG. 1 (hereinafter, referred to as the "first method") and the method or process according to the embodiment illustrated in FIG. 8 (hereinafter, referred to as the "second method") is described.

In the first method, as an image is expanded at a position before the transformation of the object 10, an image is generate by reflecting the background at a position before the transformation of the object 10, and accordingly, an object proposal area may be inferred.

In the second method, an object proposal area is inferred (determined) at a position after the transformation of the object 10, an object proposal area may be inferred by reflecting the background at a position after the transformation of the object 10.

Accordingly, when the object proposal area (the first object proposal area 100a in the fourth operation 1d of FIG. 1) of the first method or process is compared with the object proposal area (the expanded second object proposal area 100c in the sixth operation 8f of FIG. 8) of the second method, the object proposal area 100c according to the second method or process is inferred to be more suitable for the surrounding of the position after the transformation of the object 10, and thus, an effect of obtaining more natural output image may be expected by the second method.

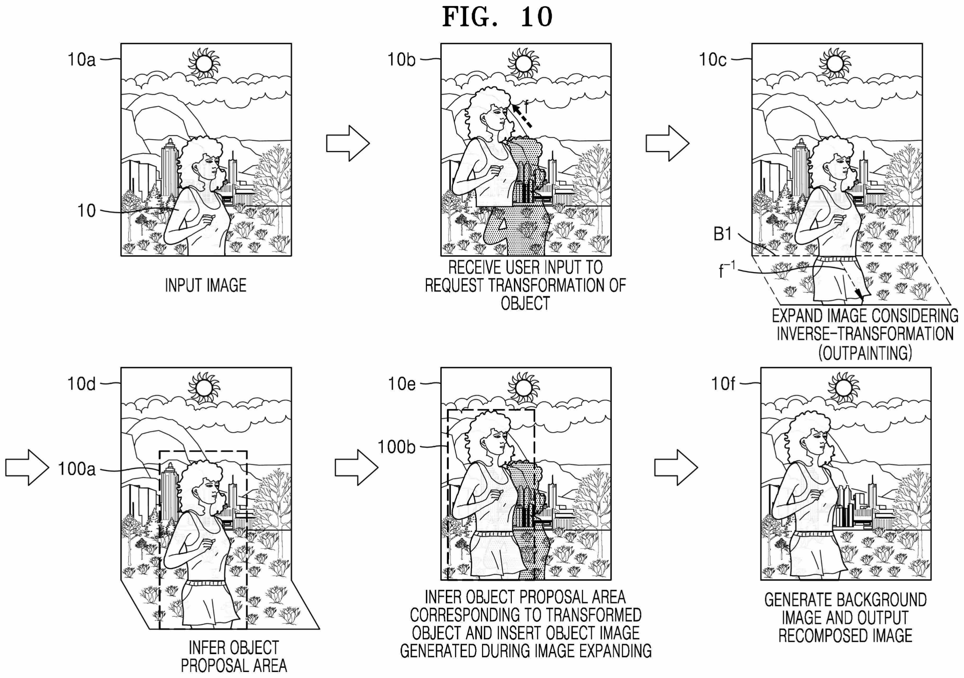

FIG. 10 is a view for explaining an embodiment of editing an image by using an object image without change, the object image being generated in a process of expanding an input image considering inverse-transformation with respect to the transformation of an object. FIG. 10 illustrates images respectively corresponding to a first operation 10a to a sixth operation 10f according to an image processing order.

Comparing FIG. 10 with FIG. 1, all the other steps are identical except only the fifth steps 1e and 10e. Accordingly, description about the same steps are omitted, and only the fifth operation 10e of FIG. 10 is described.

In the fifth operation 10e, the computing device may transform the object 10 according to the request included in the user input received in the second operation 10b. In other words, the computing device may move the object 10 in the upper left direction on the input image. The computing device may infer the second object proposal area 100b corresponding to the object 10at a position after the movement, based on the first object proposal area 100a inferred beforehand. For example, the computing device may infer the second object proposal area 100b corresponding to the object 10 that is moved, by reflecting the size and shape of the first object proposal area 100a, a positional relationship between the first object proposal area 100a and the object 10, and the like.

The computing device may insert an image of the object 10 included in the first object proposal area 100a into the second object proposal area 100b, instead of newly generating an image of the object 10 to be inserted into the second object proposal area 100b. Next, the computing device may infer only the empty spaces generated due to the transformation (movement) of the object 10 (a part in which additional generation of a background image is required) as generation required areas (second generation required areas).

In the sixth operation 10f, the computing device may generate an image for second generation required area by using the third generative model 1230, and output the edited image.

As described above, in the embodiment illustrated in FIG. 10, the computing device uses, without change, the image of the object 10 generated by the first generative model 1210 during the expansion of the input image for inferring an object proposal area, at a position after the transformation of the object 10, thereby increasing the processing speed. According to an embodiment of the disclosure, the computing device may adjust the color, brightness, or the like of the image of the object 10 image according to the surrounding background, by using a harmonizer and the like, such that the image of the object 10 generated by the first generative model 1210 is more suitable for the surrounding background at a position after the transformation of the object 10.

In the following description, a configuration of the computing device for performing the image processing operations described above is described with reference to FIG. 11. FIG. 11 is a view for explaining a configuration of a computing device 1000 for performing image edition using a generative model, according to an embodiment of the disclosure.

Referring to FIG. 11, the computing device 1000 according to an embodiment may include an input/output interface 1100, a memory 1200, and a processor 1300. However, the components of the computing device 1000 may not be limited to the example described above, and the computing device 1000 may include more components or less components than the components described above. In an embodiment of the disclosure, some or the whole of the input/output interface 1100, the memory 1200, and the processor 1300 may be implemented in the form of one chip, and the processor 1300 may include one or more processors.

The input/output interface 1100 may include an input interface (e.g., a touch screen, a hard button, a microphone, etc.) to receive a control command, information, and the like input from a user, and an output interface (e.g., a display panel, a speaker, etc.) to display a result of execution of an operation according to the control by a user or a state of the computing device 1000.

The memory 1200, which is a configuration for storing various programs or data, may include a storage medium, such as ROM, RAM, a hard disk, a CD-ROM, DVD, and the like, or a combination of the storage media. The memory 1200 may be included in the processor 1300, not existing separately. The memory 1200 may include a volatile memory, a non-volatile memory, or a combination of a volatile memory and a non-volatile memory. The memory 1200 may store programs or instructions to perform the operations according to the embodiments described above with reference to FIGS. 1 to 10. The memory 1200 may provide data stored according to the request of the processor 1300 to the processor 1300.

The processor 1300 may be configured to control a series of processes for the computing device 1000 to operation according to the embodiments described above with reference to FIGS. 1 to 10, and may include one or a plurality of processors. In this state, the one or a plurality of processors may include general purpose processors, such as a central processing unit (CPU), an application processor (AP), a digital signal processor (DSP), and the like, graphics-dedicated processors, such as a graphics processing unit (GPU), a vision processing unit (VPU), and the like, or artificial intelligence-dedicated processors such as a neural processing unit (NPU). For example, when the one or a plurality of processors are artificial intelligence-dedicated processors, the artificial intelligence-dedicated processor may be designed in a hardware structure specified for processing a particular artificial intelligence model.

The processor 1300 may write data to the memory 1200, read data stored in the memory 1200, and in particular process data according to a predefined operation rules or an artificial intelligence model by executing the programs or instructions stored in the memory 1200. Accordingly, the processor 1300 may perform the operations described in the embodiments described above, and it can be said that the operations performed by the computing device 1000 in the embodiments described above are performed by the processor 1300 unless otherwise stated.

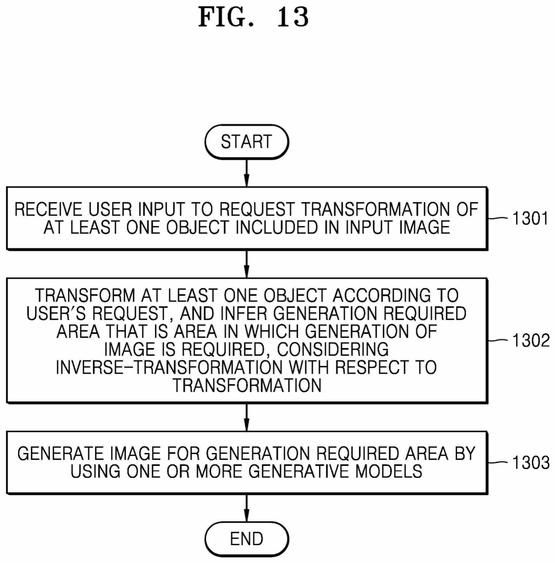

FIGS. 13 to 19 are flowcharts for explaining a method or process of editing an image by using a generative model, according to embodiments of the disclosure. In the following description, a method or process of editing an image by using a generative model, according to embodiments of the disclosure, is described with reference to FIGS. 13 to 19. As the operations described below are performed by the computing device 1000 described above, the contents included in the embodiments described above may be applied identically even through omitted below.

Referring to FIG. 13, in operation 1301, the computing device may receive a user input to request transformation of at least one object included in an input image.

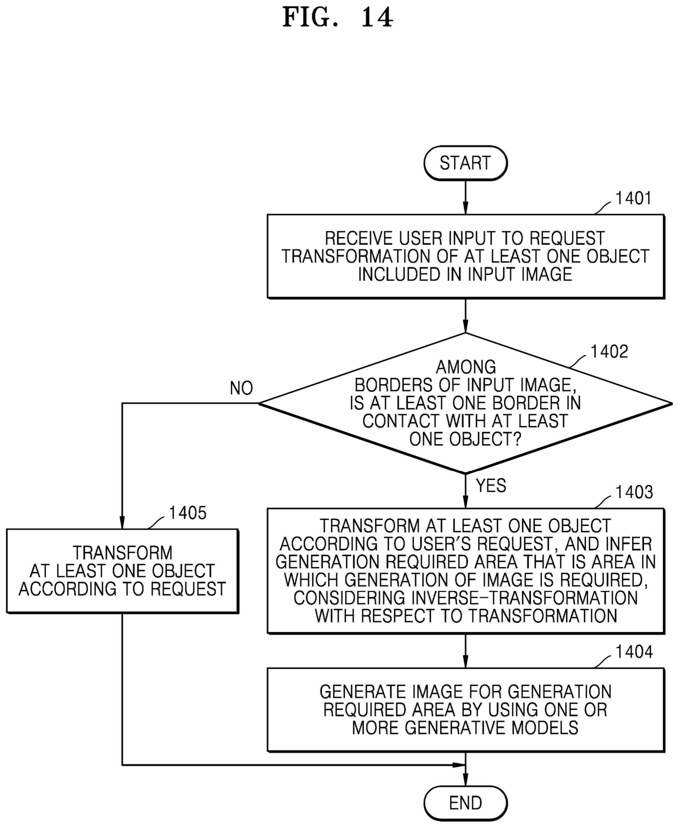

In operation 1302, the computing device may transform the at least one object according to a user's request, and infer (determine) a generation required area that is an area in which generation of an image is required, considering inverse-transformation with respect to the transformation. As the operation 1302 is the same as operation 1403 of FIG. 14, a content described above the operation 1403 below may be identically applied to the operation 1302.

In operation 1303, the computing device may generate an image for the generation required area by using one or more generative models.

Referring to FIG. 14, in operation 1401, the computing device may receive a user input to request transformation of at least one object included in an input image.

In operation 1402, the computing device may check whether, among the borders of the input image, at least one border is in contact with the at least one object (object that is a target of a transformation request). As a result of determination, when the at least one border is not in contact with the at least one object, in operation 1405, the computing device may transform the at least one object according to the request included in the user input. Reversely, as a result of determination, when the at least one border is in contact with the at least one object, operation 1403 is performed.

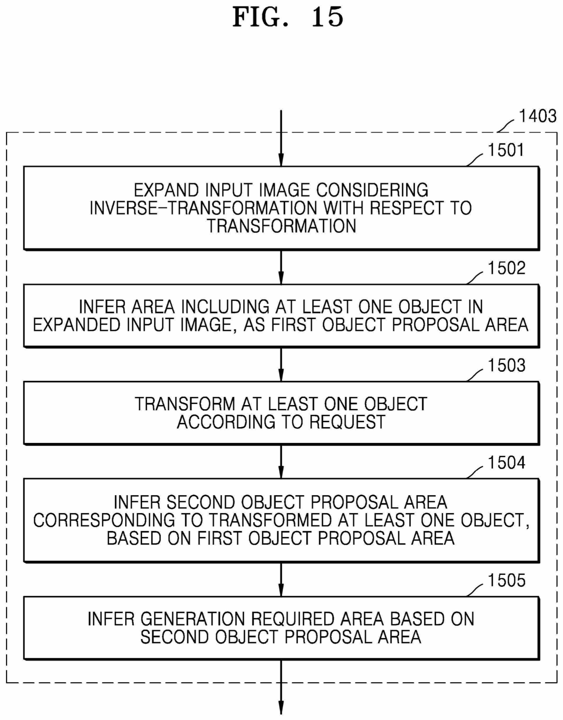

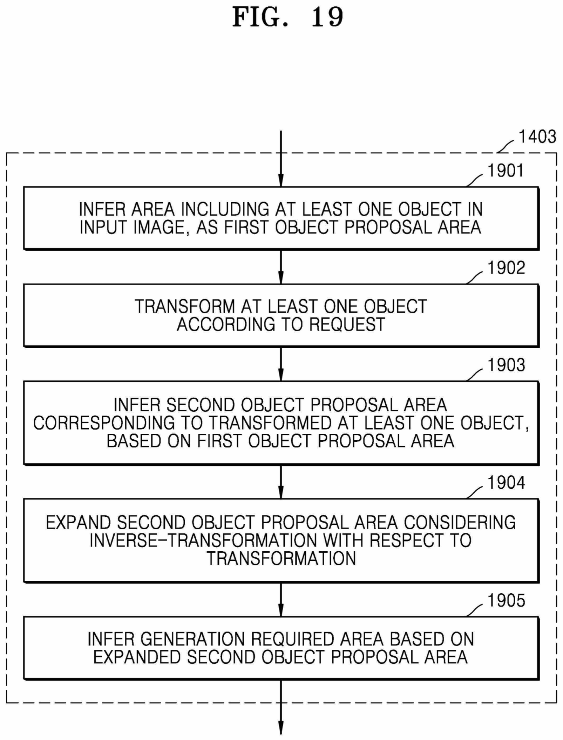

In operation 1403, the computing device may transform the at least one object according to the user's request, and infer a generation required area that is an area in which generation of an image is required, considering inverse-transformation with respect to the transformation. Sub-steps included in operation 1403 are illustrated in FIGS. 15 and 19. The steps in FIG. 15 may correspond to the first method or process described above with reference to FIGS. 1 to 6, and the steps in FIG. 19 may correspond to the second method or process described above with reference to FIGS. 8 and 9.

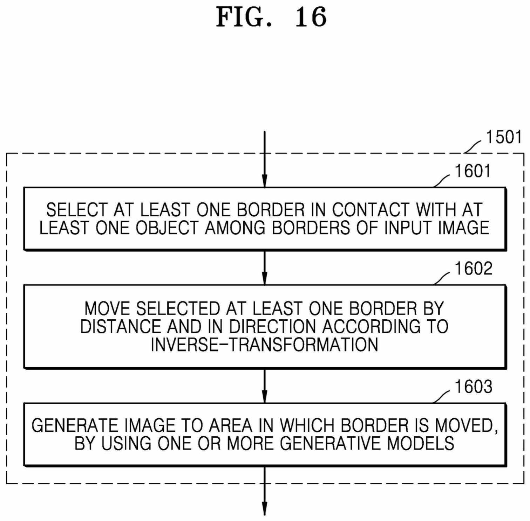

Referring to FIG. 15, in operation 1501, the computing device may expand the input image considering inverse-transformation with respect to the transformation of an object. Sub-steps included in the operation 1501 are described with reference to FIGS. 16 to 18.

Referring to FIG. 16, in operation 1601, the computing device may select at least one border in contact with at least one object among the borders of the input image. In operation 1602, the computing device may move the at least one border selected by a distance and in a direction according to the inverse-transformation. In operation 1603, the computing device may generate an image to an area in which the border is moved, by using one or more generative models.

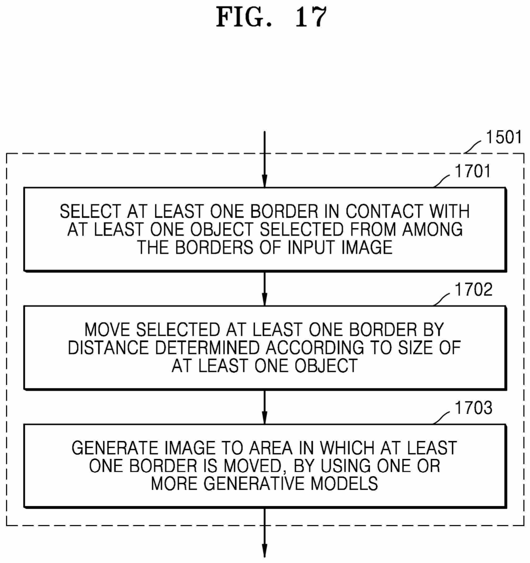

Referring to FIG. 17, in operation 1701, the computing device may select at least one border in contact with or cut-off at least one object selected from among the borders of the input image. In operation 1702, the computing device may move the selected at least one border by a distance determined according to the size of the at least one object. For example, the computing device may move the selected at least one border by a distance obtained by multiplying a length of the least one object by a preset ratio. Alternatively, for example, the computing device may determine a movable distance based on a transformable range in which at least one object is movable within an input image, and move the selected at least one border by the determined movable distance.

In operation 1703, the computing device may generate an image to an area in which the at least one border is moved, by using one or more generative models.

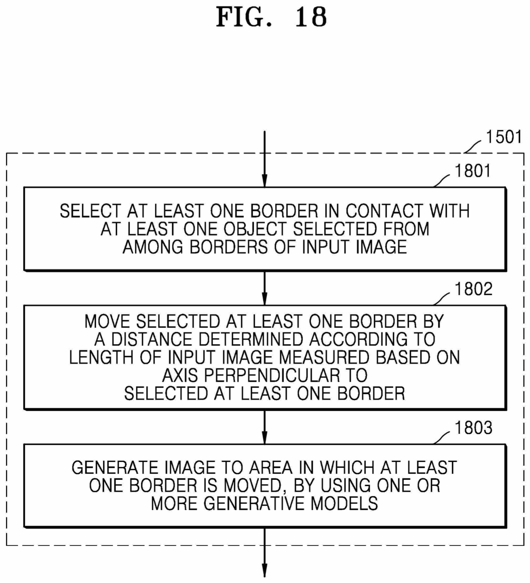

Referring to FIG. 18, in operation 1801, the computing device may select at least one border in contact with or cut-off at least one object selected from among the borders of the input image. In operation 1802, the computing device may move the selected at least one border by a distance determined according to the length of the input image measured based on an axis perpendicular to the selected at least one border. For example, the computing device may move the selected at least one border by a distance obtained by multiplying the length of the input image by a preset ratio. In operation 1803, the computing device may generate an image to an area in which the at least one border is moved, by using one or more generative models.

Referring back to FIG. 15, in operation 1502, the computing device may infer (determine) an area including the at least one object in the expanded input image, as a first object proposal area. In operation 1503, the computing device may transform at least one object according to the request included in the user input received in the operation 1401. In operation 1504, the computing device may infer (determine) a second object proposal area corresponding to the transformed at least one object, based on the first object proposal area. In operation 1505, the computing device may infer (determine) a generation required area based on the second object proposal area.

Referring to FIG. 19, in operation 1901, the computing device may infer an area including at least one object in the input image, as a first object proposal area. In operation 1902, the computing device may transform at least one object according to the request included in the user input received in the operation 1401. In operation 1903, the computing device may infer a second object proposal area corresponding to the transformed at least one object, based on the first object proposal area. In operation 1904, the computing device may expand a second object proposal area considering inverse-transformation with respect to the transformation of an object. In operation 1905, the computing device may infer a generation required area based on the expanded second object proposal area.

Referring back to FIG. 14, in operation 1404, the computing device may generate an image for the generation required area by using one or more generative models.

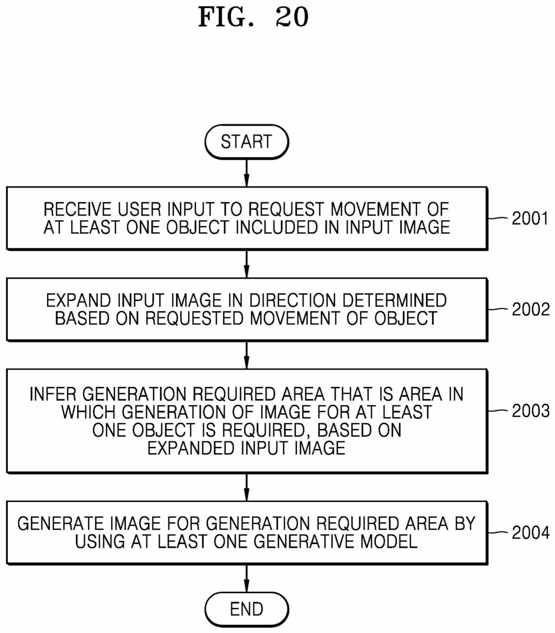

In the following description, a method or process of editing an image by using a generative model, according to an embodiment of the disclosure, is described with reference to FIGS. 20 to 23.

Referring to FIG. 20, in operation 2001, the computing device may receive a user input to request the movement of at least one object included in an input image. As described above, the user may request a movement of an object included in the input image in various ways.

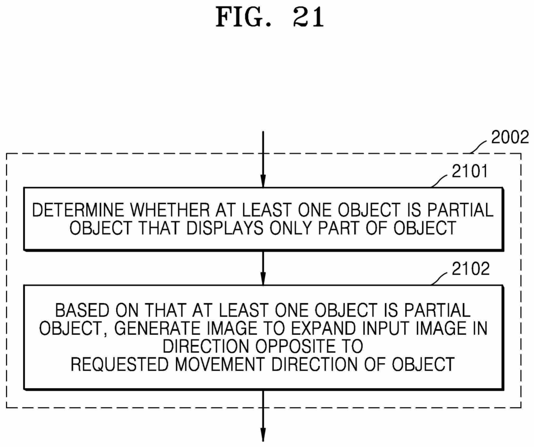

In operation 2002, the computing device may expand the input image in a direction determined based on the requested movement of the at least one object. The computing device may determine a direction to expand the input image considering the requested movement of the at least one object. For example, the computing device may determine a direction opposite to the movement direction of an object, as an expansion direction of the input image. FIG. 21 shows sub-steps included in the operation 2002.

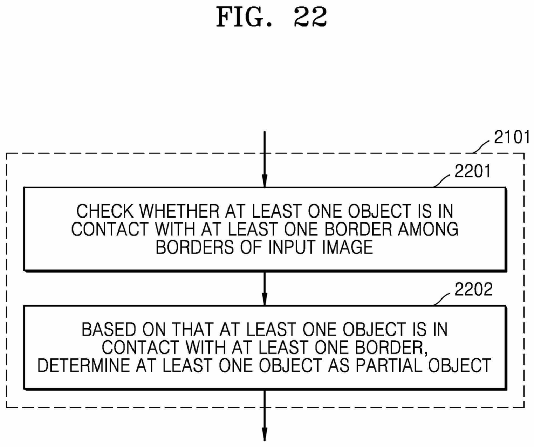

Referring to FIG. 21, in operation 2101, the computing device may determine whether the at least one object is a partial object that displays only a part of an object. According to an embodiment of the disclosure, the computing device may recognize an object with respect to the input image, and then, determine whether the object is a partial object, based on a result of the recognition of the at least one object. Alternatively, according to an embodiment of the disclosure, the computing device may determine whether the object is a partial object based on whether the object is in contact with or cut-off by the border of the input image. Sub-steps included in the operation 2101 are shown in FIG. 22.

Referring to FIG. 22, in operation 2201, the computing device may check whether the at least one object is in contact with or cut-off by at least one border among the borders of the input image. Next, in operation 2202, based on that the at least one object is in contact with or cut-off by at least one border, the computing device may determine the at least one object as a partial object.

Referring back to FIG. 21, in operation 2102, based on that the at least one object is a partial object, the computing device may generate an image to expand the input image in a direction opposite to the requested movement direction of an object. According to an embodiment of the disclosure, the computing device may select at least one border in contact with or cutting-off at least one object among the borders of the input image, move the selected at least one border in a direction opposite to the requested movement direction of an object, and generate an image to an area in which the at least one border is moved, by using one or more generative models.

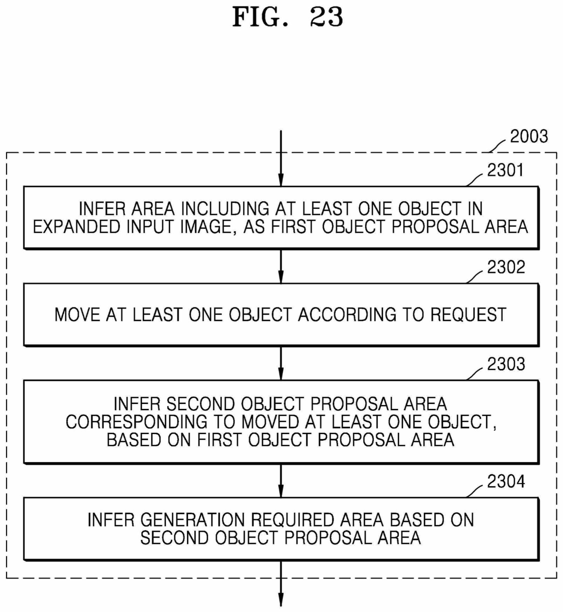

Referring back to FIG. 20, in operation 2003, the computing device may infer a generation required area that is an area in which generation of an image for the at least one object is required, based on the expanded input image. According to an embodiment of the disclosure, the computing device may infer an area in which generation of an image of the at least one object is required, as a generation required area, based on the size of the at least one object and the direction of the at least one object. Alternatively, according to an embodiment of the disclosure, the computing device may identify the at least one object included in the input image (e.g., identify the type of an object), and then, based on an identification result (e.g., the type of an object), infer an area in which generation of an image of the at least one object is required, as a generation required area. Alternatively, according to an embodiment of the disclosure, the computing device may infer an area including an object in the expanded input image, as an object proposal area, and then infer a generation required area based on the object proposal area. Sub-steps included in the operation 2003 are shown in FIG. 23.

Referring to FIG. 23, in operation 2301, the computing device may infer an area including the at least one object in the expanded input image, as a first object proposal area.

In operation 2302, the computing device may move the at least one object according to a request.

In operation 2303, the computing device may infer a second object proposal area corresponding to the moved at least one object, based on the first object proposal area.

In operation 2304, the computing device may infer a generation required area based on the second object proposal area. According to an embodiment of the disclosure, by comparing the moved at least one object with the second object proposal area, the computing device may infer an area in which an image for the moved at least one object needs to be additionally generated, as a first generation required area, and infer an area in which a background image is generated due to the movement of the at least one object, as a second generation required area.

A specific method or process in which the computing device infers the first object proposal area, the second object proposal area, and the generation required area is as described above with reference to FIG. 1.

Referring back to FIG. 20, in operation 2004, the computing device may generate an image for the generation required area by using at least one generative model. According to an embodiment of the disclosure, the computing device may generate a prompt based on at least one of information about the position of a generation required area, information about the type of at least one object, or information about a background including a generation required area, and generate an image for the generation required area by inputting the generated prompt to at least one generative model.

According to the embodiments described above, when there is a user request to transform an object included in an image, considering inverse-transformation with respect to the transformation, an image in which generation of an image is required (a generation required area) may be inferred, and by generating an image for the inferred generation required area by using a generative model, an image may be edited such that the transformed object is more suitable for the surrounding background. Furthermore, by inferring a minimum area in which generation of an image is required, as a generation required area, an image processing speed and efficiency may be improved.

According to an embodiment of the disclosure, a method or process of editing an image by using a generative model may include receiving a user input to request a movement of at least one object included in an input image, expanding the input image in a direction determined based on the requested movement of the at least one object, inferring a generation required area that is an area in which generation of an image for the at least one object is required, based on the expanded input image, and generating an image for the generation required area by using at least one generative model.

According to an embodiment of the disclosure, the expanding of the input image may include determining whether the at least one object is a partial object that displays only a part of an object, and based on that the at least one object is a partial object, generating an image to expand the input image in a direction opposite to the requested movement direction of the at least one object.

According to an embodiment of the disclosure, the determining of whether the at least one object is a partial object may include checking whether the at least one object is in contact with or cut-off by at least one border among borders of the input image, and based on that the at least one object is in contact with the at least one border, determining the at least one object as the partial object.

According to an embodiment of the disclosure, the generating of the image to expand the input image may include selecting at least one border in contact with the at least one object from among the borders of the input image, moving the selected at least one border in a direction opposite to the requested movement direction of the at least one object, and generating an image to an area in which the at least one border is moved, by using the at least one generative model.

According to an embodiment of the disclosure, the determining of whether the at least one object is a partial object may include performing object recognition on the input image, and based on a result of the recognition of the at least one object, determining whether the at least one object is the partial object.

According to an embodiment of the disclosure, the inferring of the generation required area may include inferring the area in which generation of an image of the at least one object is required, as the generation required area, based on the size of the at least one object and a direction of the at least one object.

According to an embodiment of the disclosure, the inferring of the generation required area may include identifying the at least one object, and based on a result of the identifying, inferring the area in which generation of an image of the at least one object is required, as the generation required area.

According to an embodiment of the disclosure, the inferring of the generation required area may include inferring an area including the at least one object in the expanded input image, as a first object proposal area, moving the at least one object according to the request, inferring a second object proposal area corresponding to the moved at least one object, based on the first object proposal area, and inferring the generation required area based on the second object proposal area.

According to an embodiment of the disclosure, the inferring of the generation required area based on the second object proposal area may include inferring an area in which an image for the moved at least one object needs to be additionally generated, as a first generation required area, by comparing the moved at least one object with the second object proposal area, and inferring an area in which a background image need to be additionally generated due to the movement of the at least one object, as a second generation required area.

According to an embodiment of the disclosure, the input image may be expanded by using a first generative model, an image for the first generation required area is generated by using a second generative model, an image for the second generation required area may be generated by using a third generative model, and performance of the second generative model may be higher than performance of the first generative model or the third generative model.

According to an embodiment of the disclosure, the generating of the image for the generation required area may include generating a prompt based on at least one of information about a position of the generation required area, information about a type of the at least one object, or information about a background including the generation required area, and inputting the generated prompt to the at least one generative model.

According to an embodiment of the disclosure, a computing device includes an input/output interface configured to receive a user input to request processing an image and output an image processed according to the user input, a memory to store commands for processing the image, and at least one processor, wherein the at least one processor is configured to, by executing the commands, when receiving a user input to request a movement of at least one object included in an input image, expand the input image in a direction determined based on the requested movement of the at least one object, infer a generation required area that is an area in which generation of an image for the at least one object is required, based on the expanded input image, and generate an image for the generation required area, by using at least one generative model.

According to an embodiment of the disclosure, the at least one processor may be further configured to, in the expanding of the input image, determine whether the at least one object is a partial object that displays only a part of an object, and based on that the at least one object is a partial object, generate an image to expand the input image in a direction opposite to the requested movement direction of the at least one object.

According to an embodiment of the disclosure, the at least one processor may be configured to, in the determining of whether the at least one object is a partial object, check whether the at least one object is in contact with or cut-off by at least one border among borders of the input image, and based on that the at least one object is in contact with the at least one border, determine the at least one object as a partial object.

According to an embodiment of the disclosure, the at least one processor may be further configured to, in the generating of the image to expand the input image, select at least one border in contact with or cut-off by the at least one object among the borders of the input image, move the selected at least one border in a direction opposite to the requested movement direction of the at least one object, and generate an image to an area in which the at least one border is moved, by using one or more generative models.

According to an embodiment of the disclosure, the at least one processor may be further configured to, in the determining of whether the at least one object is a partial object, perform object recognition on the input image, and based on a result of the recognition of the at least one object, determine whether the at least one object is a partial object.

According to an embodiment of the disclosure, the at least one processor may be further configured to, in the inferring of the generation required area, infer an area in which generation of an image of the at least one object is required, as the generation required area, based on the size of the at least one object and a direction of the at least one object.

According to an embodiment of the disclosure, the at least one processor may be further configured to, in the inferring of the generation required area, identify the at least one object, and based on a result of the identifying, infer an area in which generation of an image of the at least one object is required, as the generation required area.

According to an embodiment of the disclosure, the at least one processor may be further configured to, in the inferring of the generation required area, infer an area including the at least one object in the expanded input image, as a first object proposal area, move the at least one object according to the request, infer a second object proposal area corresponding to the moved at least one object, based on the first object proposal area, and infer the generation required area based on the second object proposal area.

According to an embodiment of the disclosure, the at least one processor may be further configured to, in the inferring of the generation required area based on the second object proposal area, infer an area in which an image for the moved at least one object needs to be additionally generated, as a first generation required area, by comparing the moved at least one object with the second object proposal area, and infer an area in which a background image needs to be generated due to the movement of the at least one object, as a second generation required area.

According to an embodiment of the disclosure, the at least one processor may be further configured to expand the input image by using a first generative model, generate an image for the first generation required area by using a second generative model, and generate an image for the second generation required area by using a third generative model, and performance of the second generative model is higher than performance of the first generative model or the third generative model.

According to an embodiment of the disclosure, the at least one processor may be further configured to, in the generating of the image for the generation required area, generate a prompt based on at least one of information about a position of the generation required area, information about a type of the at least one object, or information about a background including the generation required area, and input the generated prompt to the at least one generative model.

According to an embodiment of the disclosure, a method or process of editing an image by using a generative model includes receiving a user input to request transformation of at least one object included in an input image, checking whether at least one border among borders of the input image is in contact with the at least one object, based on that the at least one border is in contact with the at least one object, transforming the at least one object according to the request, inferring a generation required area that is an area in which generation of an image is required, considering inverse-transformation with respect to the transformation, and generating an image for the generation required area by using one or more generative models.

According to an embodiment of the disclosure, the inferring of the generation required area may include expanding the input image considering the inverse-transformation, inferring an area including the at least one object in the expanded input image, as a first object proposal area, transforming the at least one object according to the request, inferring a second object proposal area corresponding to the transformed at least one object, based on the first object proposal area, and inferring the generation required area based on the second object proposal area.

According to an embodiment of the disclosure, the expanding of the input image may include selecting the at least one border in contact with or cut-off by at least one object among borders of the input image, moving the selected at least one border by a distance and in a direction according to the inverse-transformation, and generating an image to an area in which the at least one border is moved, by using the at least one generative model.

According to an embodiment of the disclosure, the expanding of the input image may include selecting at least one border in contact with or cut-off by the selected at least one object among the borders of the input image, moving the selected at least one border by a distance determined according to the size of the at least one object, and generating an image to an area in which the at least one border is moved, by using the at least ono generative model.

According to an embodiment of the disclosure, the moving of the selected at least one border by the distance determined according to the size of the at least one object may include moving the selected at least one border by a distance obtained by multiplying the length of the least one object by a preset ratio.

According to an embodiment of the disclosure, the moving of the selected at least one border by the distance determined according to the size of the at least one object may include determining a movable distance based on a transformable range of the at least one object within the input image, and moving the selected at least one border by the determined movable length.

According to an embodiment of the disclosure, the expanding of the input image may include selecting at least one border in contact with or cut-off by the selected at least one object among the borders of the input image, moving the selected at least one border by the distance determined according to the measured length of the input image based on an axis perpendicular to the selected at least one border, and generating an image to an area in which the at least one border is moved, by using the at least one generative model.

According to an embodiment of the disclosure, the moving of the selected at least one border by the distance determined according to the length of the input image may include moving the selected at least one border by a distance obtained by multiplying a length of the input image by a preset ratio.

According to an embodiment of the disclosure, the inferring of the generation required area based on the second object proposal area may include inferring an area in which an image for the transformed at least one object needs to be additionally generated, as a first generation required area, by comparing the transformed at least one object with the second object proposal area, and inferring an area in which a background image needs to be generated due to the transformation of the at least one object, as a second generation required area.

According to an embodiment of the disclosure, the input image may be expanded by using the first generative model, an image for the first generation required area may be generated by using the second generative model, an image for the second generation required area may be generated by using the third generative model, and the performance of the second generative model may be higher than the performance of the first generative model or the third generative model.

According to an embodiment of the disclosure, the inferring of the generation required area may include inferring an area including the at least one object in the input image, as a first object proposal area, transforming the at least one object according to the request, inferring a second object proposal area corresponding to the transformed at least one object, expanding the second object proposal area considering the inverse-transformation, based on the first object proposal area, and inferring the generation required area based on the expanded second object proposal area.

According to an embodiment of the disclosure, the inferring of the generation required area based on the expanded second object proposal area may include inferring an area in which an image for the transformed at least one object needs to be additionally generated, as a first generation required area, by comparing the transformed at least one object with the expanded second object proposal area, and inferring an area in which a background image needs to be generated due to the transformation of the at least one object, as a second generation required area.

A computing device according to an embodiment includes an input/output interface configured to receive a user input to request processing an image and output an image processed according to the user input, a memory to store commands for processing the image, and at least one processor, wherein the at least one processor is configured to, by executing the commands, when receiving a user input to request a transformation of at least one object included in an input image, check whether at least one border among borders of the input image is in contact with or cut-off by the at least one object, based on that the at least one border is in contact with the at least one object, transform the at least one object according to the request, infer a generation required area that is an area in which generation of an image is required, considering inverse-transformation with respect to the transformation, and generate an image for the generation required area by using one or more generative models.

According to an embodiment of the disclosure, the at least one processor may be further configured to, in the inferring of the generation required area, expand the input image considering the inverse-transformation the input image, infer an area including at least one object in the expanded input image, as a first object proposal area, transform the at least one object according to the request, infer a second object proposal area corresponding to the transformed at least one object, based on the first object proposal area, and infer the generation required area based on the second object proposal area.

According to an embodiment of the disclosure, the at least one processor may be further configured to, in the expanding of the input image, select at least one border in contact with the selected at least one object among borders of the input image, move the selected at least one border by a distance and in a direction according to the inverse-transformation, and generate an image to an area in which the at least one border is moved, by using one or more generative models.

According to an embodiment of the disclosure, the at least one processor may be further configured to, in the expanding of the input image, select at least one border in contact with or cut-off by the selected at least one object among the borders of the input image, moving the selected at least one border by the distance determined according to the size of the at least one object, and generate an image to an area in which the at least one border is moved, by using one or more generative models.

According to an embodiment of the disclosure, the at least one processor may be further configured to, in the moving of the selected at least one border by the distance determined according to the size of the at least one object, move the selected at least one border by a distance obtained by multiplying a length of the least one object by a preset ratio.

According to an embodiment of the disclosure, the at least one processor may be further configured to, in the moving of the selected at least one border by the distance determined according to the size of the at least one object, determine a movable distance based on a transformable range of the at least one object within the input image, and move the selected at least one border by the determined movable length.

According to an embodiment of the disclosure, the at least one processor may be further configured to, in the inferring of the generation required area based on the second object proposal area, infer an area in which an image for the transformed at least one object needs to be additionally generated, as a first generation required area, by comparing the transformed at least one object with the second object proposal area, and infer an area in which a background image needs to be generated due to the transformation of the at least one object, as a second generation required area.

According to an embodiment of the disclosure, the at least one processor may be further configured to, expand the input image by using the first generative model, generate an image for the first generation required area by using the second generative model, generate an image for the second generation required area by using the third generative model, and the performance of the second generative model may be higher than the performance of the first generative model or the third generative model.

According to an embodiment of the disclosure, the at least one processor may be further configured to, in the inferring of the generation required area, infer an area including the at least one object in the input image, as a first object proposal area, transform the at least one object according to the request, infer a second object proposal area corresponding to the transformed at least one object, expand the second object proposal area considering the inverse-transformation based on the first object proposal area, and infer the generation required area based on the expanded second object proposal area.

Various embodiments of the disclosure may be embodied or supported by one or more computer programs, and the computer programs may be formed from computer-readable program code and stored in a computer-readable medium. In the disclosure, an "application" and a "program" may refer to one or more computer programs, software components, instruction sets, procedures, functions, objects, classes, instances, related data, or a part thereof, which are suitable for embodiment in a computer-readable program code. A "computer-readable program code" may include various types of computer codes including a source code, an object code, and an executable code. A "computer-readable medium" may include various types of media to be accessed by a computer, such as read only memory (ROM), random access memory (RAM), a hard disk drive (HDD), a compact disc (CD), a digital video disc (DVD), or various types of memories.

Furthermore, a machine-readable storage medium may be provided in the form of a non-transitory storage medium. Here, the "non-transitory storage medium" may exclude a tangible device, and wired, wireless, optical, or other communication links for transmitting temporary electrical or other signals. The "non-transitory storage medium" does not distinguish a case of semi-permanently storing data in a storage medium from a case of temporarily storing data. For example, the "non-transitory storage medium" may include a buffer in which data is temporarily stored. A computer-readable medium may be a useable medium that is accessible by a computer and may include all of volatile and non-volatile media and separable and inseparable media. The computer-readable medium includes a medium for permanently storing data and a medium on which data can be stored and overwritten later, for example, a rewritable optical disc or an erasable memory device.

According to an embodiment of the disclosure, the method or process according to various embodiments disclosed in the disclosure may be provided by being included in a computer program product. A computer program product as goods may be dealt between a seller and a buyer. The computer program product is distributed in the form of a machine-readable storage medium, for example, a compact disc read only memory (CD-ROM), or through application stores, or can be distributed directly or online, for example, download or upload, between two user devices, for example, smart phones. In the case of online distribution, at least a part of the computer program product may be at least temporarily stored or temporarily generated in a machine-readable storage medium such as a manufacturer's server, an application store's server, or a memory of a relay server.

The above descriptions of the disclosure is for an example, and it will be understood that one of ordinary skill in the art to which the disclosure pertains can easily modify the disclosure into other detailed form without changing the technical concept or essential features of the disclosure. For example, even when the described technologies are performed in an order different from the described order, and/or the described components, such as a system, a structure, a device, a circuit, and the like are coupled or combined in a form different from the form according to the described method, and the described components are substituted or replaced by other component or equivalents, an appropriate result may be achieved. Thus, the above-described embodiments are exemplary in all aspects and should not be for purposes of limitation. For example, each constituent element described to be a single type may be embodied in a distributive manner. Likewise, the constituent elements described to be distributed may be embodied in a combined form.

The scope of the disclosure is defined not by the detailed description of the disclosure but by the appended claims, and all changes and modifications introduced from the concept and scope of the claims and the equivalent concept thereof will be construed as being included in the disclosure.

## Claims

1. A method of image processing by using one or more generative models, the method being executed by at least one processor, the method comprising:
receiving a user input for a movement of at least one object included in an input image;
expanding the input image in a direction determined based on the movement of the at least one object;
determining a generation required area based on the expanded input image, wherein the generation required area is an area in which generation of a partial image for the at least one object is required;
generating an image for the generation required area by using at least one generative model; and
outputting a recomposed image based on the input image and the partial image for the at least one object.

2. The method of claim 1, wherein the expanding of the input image comprises:
determining whether the at least one object is a partial object that displays only a part of an object; and
based on the at least one object being the partial object, generating an image to expand the input image in a direction opposite to a movement direction of the at least one object.

3. The method of any of claims 1 and 2, wherein the determining of whether the at least one object is the partial object comprises:
checking whether the at least one object is cut-off by at least one border among borders of the input image; and
determining the at least one object as the partial object based on the at least one object being cut-off by the at least one border.

4. The method of any of claims 1 to 3, wherein the generating ofthe image to expand the input image comprises:
selecting a first border among at least one border that cuts-off the at least one object from among borders of the input image;
moving the first border in a direction opposite to a movement direction of the at least one object; and
generating an image in an area in which the first border is moved, by using the at least one generative model.

5. The method of any of claims 1 to 4, wherein the determining of the generation required area comprises determining the area in which generation of the partial image of the at least one object is required, as the generation required area, based on a size of the at least one object and a direction of the movement of the at least one object.

6. The method of any of claims 1 to 5, wherein the determining of the generation required area comprises:
determining an area including the at least one object in the expanded input image, as a first object proposal area;
moving the at least one object according to the user input;
determining a second object proposal area corresponding to the moved at least one object, based on the first object proposal area; and
determining the generation required area based on the second object proposal area.

7. The method of any of claims 1 to 6, wherein the determining of the generation required area based on the second object proposal area comprises:
determining a first area in which the partial image for the moved at least one object needs to be additionally generated, as a first generation required area, based on a comparison between the moved at least one object and the second object proposal area; and
determining a second area in which a background image needs to be generated due to the movement of the at least one object, as a second generation required area.

8. The method of any of claims 1 to 7, wherein the input image is expanded by using a first generative model,
the partial image for the moved at least one object in the first generation required area is generated by using a second generative model,
the background image in the second generation required area is generated by using a third generative model, and
performance of the second generative model is higher than performance of the first generative model or the third generative model.

9. The method of any of claims 1 to 8, wherein the generating of the image for the generation required area comprises:
generating a prompt based on at least one of information about a position of the generation required area, information about a type of the at least one object, or information about a background including the generation required area; and
inputting the generated prompt to the at least one generative model.

10. A computing device comprising:
an input/output interface (1100) configured to receive a user input to request processing an input image and output a recomposed image processed according to the user input;
a memory (1200) to store instructions for processing the input image; and
at least one processor (1300) configured to execute the instructions,
wherein the instructions cause the at least one processor to:
receive the user input for a movement of at least one object included in the input image,
expand the input image in a direction determined based on the movement of the at least one object;
determine a generation required area based on the expanded input image, wherein the generation required area is an area in which generation of a partial image for the at least one object is required;
generate an image for the generation required area, by using at least one generative model; and
output the recomposed image based on the input image and the partial image for the at least one object.

11. The computing device of claim 10, wherein, in the expanding of the input image, the instructions further cause the at least one processor (1300) to:
determine whether the at least one object is a partial object that displays only a part of an object; and
based on the at least one object being the partial object, generate an image to expand the input image in a direction opposite to a movement direction of the at least one object.

12. The computing device of any one of claims 10 and 11, wherein, in the determining of whether the at least one object is the partial object, the instructions further cause the at least one processor (1300) to:
check whether the at least one object is cut-off by at least one border among borders of the input image; and
determine the at least one object as the partial object based on the at least one object being cut-off by the at least one border.

13. The computing device of any one of claims 10 to 12, wherein, in the generating of the image to expand the input image, the instructions further cause the at least one processor (1300) to:
select a first border among at least one border that cuts-off the at least one object among borders of the input image,
move the first border in a direction opposite to a movement direction of the at least one object; and
generate an image in an area in which the first border is moved, by using the at least one generative model.

14. The computing device of any one of claims 10 to 13, wherein, in the determining of the generation required area, the instructions further cause the at least one processor (1300) to:
determine an area including the at least one object in the expanded input image, as a first object proposal area;
move the at least one object according to the request;
determine a second object proposal area corresponding to the moved at least one object, based on the first object proposal area; and
determine the generation required area based on the second object proposal area.

15. The computing device of any one of claims 10 to 14, wherein, in the determining of the generation required area based on the second object proposal area, the instructions further cause the at least one processor to:
determine a first area in which the partial image for the moved at least one object needs to be additionally generated, as a first generation required area, based on a comparison between the moved at least one object and the second object proposal area; and
determining a second area in which a background image needs to be generated due to the movement of the at least one object, as a second generation required area.
